# EUROPEAN PATENT APPLICATION

(11) **EP 3 893 352 A1**
(43) Date of publication of application: **13.10.2021**
(21) Application number: 18944066.2
(22) Date of filing: 21.12.2018
(51) Int. Cl.: H02J 7/00

(54) **WIRELESS CHARGING METHOD, DEVICE TO BE CHARGED, WIRELESS CHARGING APPARATUS AND STORAGE MEDIUM**

(71) Applicant: GUANGDONG OPPO MOBILE TELECOMMUNICATIONS CORP., LTD., Dongguan, Guangdong 523860 (CN)
(72) Inventor: WAN, Shiming, Dongguan, Guangdong 523860 (CN)
(74) Representative: Taor, Simon Edward William
(86) International application number: PCT/CN2018/122701
(87) International publication number: WO 2020/124563

(57) **Abstract**

A wireless charging method, a device to be charged (230), a wireless charging apparatus (220) and a storage medium. The wireless charging method is applied to the device to be charged (230), wherein the device to be charged (230) is configured to have a wireless charging receiving circuit (231). The wireless charging method comprises: when wireless charging is performed, detecting a battery charging voltage and/or a battery charging current, and simultaneously detecting an output current corresponding to the wireless charging receiving circuit (231) (101); determining a target charging power according to the battery charging voltage and/or the battery charging current, and determining a target charging current according to the output current (102); sending an adjustment request to the wireless charging apparatus (220), wherein the adjustment request carries the target charging power and/or the target charging current (103); and receiving an adjusted wireless charging signal sent by the wireless charging apparatus (220), and performing wireless charging according to the adjusted wireless charging signal (104).

## Description

### TECHNICAL FIELD

The present disclosure relates to the technology field of wireless charging, and more particularly to a wireless charging method, a device to be charged, a wireless charging apparatus, and a storage medium.

### BACKGROUND

Wireless charging technology originates from wireless power transmission technology and can be divided into low-power wireless charging and high-power wireless charging. The low-power wireless charging often uses electromagnetic induction, such as a Qi method for charging a mobile phone. The high-power wireless charging often uses resonance to transfer energy from a wireless charging apparatus to a device to be charged.

However, in a wireless charging process, when a charging power is increased by increasing a charging current or a charging voltage, there exists the problem of charging heat. In the prior art, overcoming the defect of charging heat and increasing the efficiency of wireless charging effectively cannot achieved simultaneously.

### SUMMARY OF DISCLOSURE

Embodiments of the present disclosure provide a wireless charging method, a device to be charged, a wireless charging apparatus, and a storage medium. When the wireless charging apparatus and the device to be charged perform wireless charging, the wireless charging efficiency can be increased significantly while the heat problem of charging is solved.

Technical schemes of the embodiments of the present disclosure are implemented as follows.

An embodiment of the present disclosure provides a wireless charging method applied to a device to be charged. The device to be charged is configured with a wireless charging receiving circuit. The method includes.
during wireless charging, detecting a charging voltage of a battery and/or a charging current of the battery, and detecting a corresponding output current of the wireless charging receiving circuit simultaneously;
determining a target charging power according to the charging voltage of the battery and/or the charging current of the battery, and determining a target charging current according to the output current;
transmitting an adjustment request to a wireless charging apparatus, wherein the adjustment request carries the target charging power and/or the target charging current; and
receiving adjusted wireless charging signals transmitted by the wireless charging apparatus, and performing the wireless charging according to the adjusted wireless charging signals.

An embodiment of the present disclosure provides a wireless charging method applied to a wireless charging apparatus. The wireless charging apparatus is configured with a wireless charging transmitting circuit. The method includes:
during wireless charging, receiving an adjustment request transmitted by a device to be charged, wherein the adjustment request carries a target charging power and/or a target charging current;
adjusting, according to the target charging power and/or the target charging current, an input voltage of the wireless charging transmitting circuit to obtain adjusted wireless charging signals; and
transmitting, in response to the adjustment request, the adjusted wireless charging signals to the device to be charged, so that an output of the wireless charging apparatus matches the target charging power and/or the target charging current.

The embodiments of the present disclosure provide a wireless charging method, a device to be charged, a wireless charging apparatus, and a storage medium. The wireless charging method is applied to a device to be charged. The device to be charged is configured with a wireless charging receiving circuit. The wireless charging method includes: during wireless charging, detecting a charging voltage of a battery and/or a charging current of the battery, and detecting a corresponding output current of the wireless charging receiving circuit simultaneously; determining a target charging power according to the charging voltage of the battery and/or the charging current of the battery, and determining a target charging current according to the output current; transmitting an adjustment request to a wireless charging apparatus, wherein the adjustment request carries the target charging power and/or the target charging current; and receiving adjusted wireless charging signals transmitted by the wireless charging apparatus, and performing the wireless charging according to the adjusted wireless charging signals. It can be seen that in the embodiment of the present disclosure, the device to be charged determines the target charging power and target charging current according to the charging voltage of the battery and/or the charging current of the battery and the output current of the wireless charging receiving circuit, transmits the adjustment request carrying the target charging power and/or the target charging current to the wireless charging apparatus, receives the adjusted wireless charging signals transmitted by the wireless charging apparatus, and performs the wireless charging according to the adjusted wireless charging signals, thereby implementing the power adjustment. In the method of feeding back the charging voltage of the battery and/or the charging current of the battery and the output current of the wireless charging receiving circuit to the wireless charging apparatus to adjust the charging power in real time, not only higher charging efficiency can be obtained by feeding back the charging parameters of the battery, but also a lower voltage difference can be ensured by feeding back the output current of the wireless charging receiving circuit. Accordingly, when the wireless charging apparatus and the device to be charged perform the wireless charging, the wireless charging efficiency can be increased significantly while the heat problem of charging is solved.

### BRIEF DESCRIPTION OF DRAWINGS

FIG. 1 illustrates an implementation of wireless charging.
FIG. 2 illustrates an implementation of wireless charging in accordance with an embodiment of the present disclosure.
FIG. 3 illustrates an implementation flowchart of a wireless charging method provided by an embodiment of the present disclosure.
FIG. 4 illustrates another implementation of wireless charging in accordance with an embodiment of the present disclosure.
FIG. 5 illustrates an implementation flowchart of a wireless charging method provided by another embodiment of the present disclosure.
FIG. 6 illustrates an implementation flowchart of a wireless charging method provided by yet another embodiment of the present disclosure.
FIG. 7 illustrates a structural diagram of a device to be charged provided by an embodiment of the present disclosure.
FIG. 8 illustrates a structural diagram of a wireless charging apparatus provided by an embodiment of the present disclosure.

### DETAILED DESCRIPTION OF EMBODIMENTS

The following clearly describes the technical solutions in the embodiments of the present disclosure with reference to the accompanying drawings in the embodiments of the present disclosure. It can be understood that the specific embodiments described here are only used for explaining the related application, but are not intended to limit the embodiments of the present disclosure. Moreover, it should also be noted that, for ease of description, the accompanying drawings illustrate only the parts related to the embodiments of the relevant application.

In the prior art, the wireless charging technology standard generates only fixed outputs, such as 5V/1A or 9V/1.2A, to a device to be charged. The device to be charged needs to include a charging management module to charge a battery. There exist the problems of efficiency and heat.

Wireless charging technology originates from wireless power transmission technology. According to the different principles of wireless charging, wireless charging methods are mainly divided into three methods: an electromagnetic induction method (or a magnetic coupling method), a radio wave method, and an electromagnetic resonance method. Currently, mainstream wireless charging standards include Qi standard, Power Matters Alliance (PMA) standard, and Wireless Power Alliance (Alliance for Wireless Power, A4WP). The Qi standard and the PMA standard adopt electromagnetic induction for wireless charging. The A4WP standard adopts electromagnetic resonance for wireless charging. In the embodiments of the present disclosure, the wireless charging technology for a device to be charged adopts electromagnetic induction. A magnetic field is used for transmitting energy between a wireless charging apparatus and the device to be charged. A battery of the device to be charged can be wirelessly charged without a charging cable connected between the wireless charging apparatus and the device to be charged, so that the charging is more convenient.

A fixed-frequency mode of wireless charging refers to that an operating frequency of a wireless charging transmitting circuit of a wireless charging apparatus for wireless charging is fixed. When a wireless charging system controls an output power of a wireless charging receiving circuit by adjusting an input voltage of the wireless charging transmitting circuit, a ratio of an output voltage of the wireless charging receiving circuit to the input voltage of the wireless charging transmitting circuit is basically 1:1 because a ratio of a transmitting coil to a receiving coil is 1:1. Accordingly, when the wireless charging is performed, an objective of adjusting the output voltage of the wireless charging receiving circuit can be achieved by directly adjusting the input voltage of the wireless charging transmitting circuit.

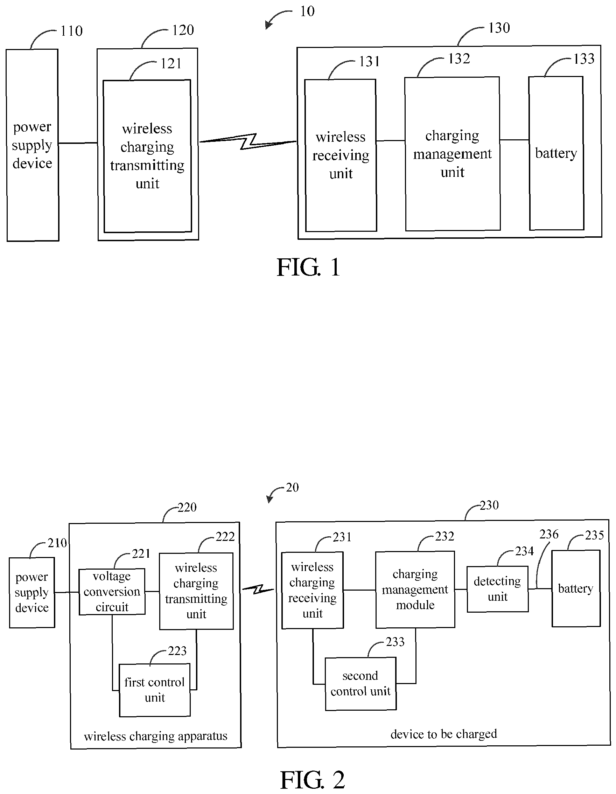

In the prior art, FIG. 1 illustrates an implementation of wireless charging. As shown in FIG. 1, a wireless charging system 10 includes a power supply device 110, a wireless charging apparatus 120, and a device 130 to be charged. The wireless charging apparatus 120 can be, for example, a wireless charging dock. The device 130 to be charged can be, for example, a terminal.

After the power supply device 110 is connected to the wireless charging apparatus 120, an output voltage and an output current of the power supply device 110 can be transmitted to the wireless charging apparatus 120.

The wireless charging apparatus 120 can convert the output voltage and the output current of the power supply device 110 into wireless charging signals (electromagnetic signals) via an internal wireless charging transmitting unit 121 and then transmit the wireless charging signals. For example, the wireless charging transmitting unit 121 can convert the output current of the power supply device 110 into an alternating current and convert the alternating current into the wireless charging signals via a transmitting coil or a transmitting antenna.

The device 130 to be charged can receive, via a wireless receiving unit 131, the wireless charging signals outputted by the wireless charging transmitting unit 121, and convert the wireless charging signals into an output voltage and an output current of the wireless receiving unit 131. For example, the wireless receiving unit 131 can convert, via a receiving coil or a receiving antenna, the wireless charging signals outputted by the wireless charging transmitting unit 121 into an alternating current, perform a rectifying operation and/or a filtering operation on the alternating current, and convert the alternating current into the output voltage and the output current of the wireless receiving unit 131.

In an embodiment of the present disclosure, before the wireless charging, the wireless charging apparatus 120 can negotiate a transmitting power of the wireless charging transmitting unit 121 with the device 130 to be charged in advance. When it is assumed that the power which the wireless charging apparatus 120 negotiates with the device 130 to be charged is 5W, the output voltage and the output current of the wireless receiving unit 131 are generally 5V and 1A. When it is assumed that the power which the wireless charging apparatus 120 negotiates with the device 130 to be charged is 10.8W, the output voltage and the output current of the wireless receiving unit 131 are generally 9V and 1.2A.

When the output voltage of the wireless receiving unit 131 is not suitable to be directly loaded into two terminals of a battery 133, it is necessary to perform constant voltage control and/or constant current control via a charging management unit 132 in the device 130 to be charged to obtain a charging voltage and/or a charging current expected by the battery 133 in the device 130 to be charged.

The charging management unit 132 can be configured to convert the output voltage of the wireless charging receiving unit 131, so that an output voltage and/or an output current of the charging management unit 132 meets requirements of the charging voltage and the charging current expected by the battery 133. In an embodiment of the present disclosure, the charging management unit 132 can be, for example, a charging integrated circuit (IC), a booster circuit, a low dropout regulator (LDO) and so on.

Since the charging management unit 132 is limited by low power conversion efficiency (also referred to as energy conversion efficiency or circuit conversion efficiency), electrical energy of an unconverted portion is lost in the form of heat. The heat of the portion is concentrated inside the device 130 to be charged. The design space and heat dissipation space of the device 130 to be charged are very small (e.g., the physical size of a mobile terminal used by a user is getting lighter and thinner, and a large number of electronic components are densely arranged in the mobile terminal to improve the performance of the mobile terminal). Accordingly, not only the design difficulty of the charging management unit 132 is increased, but also the device 130 to be charged is abnormal because it is difficult to remove the heat concentrated in the device 130 to be charged in real time.

In order to reduce the heat generated by the charging management unit 132, the wireless charging apparatus 120 can adopt a low-voltage and high-current manner to output the charging power. For example, a charging power of 5V/4A is adopted. As a possible implementation, the wireless charging transmitting unit 121 can generate wireless charging signals based on 5V/4A. Correspondingly, the wireless charging receiving unit 131 can convert the wireless charging signals into an output voltage/an output current of 5V/4A. The large charging current of 4A causes the transmitting coil of the wireless charging transmitting unit 121 and the receiving coil of the wireless charging receiving unit 131 to generate a large amount of heat during a power transmission process. The heat generated during the charging process affects a charging speed and a product life and also reduces product reliability.

In summary, an urgent problem of how to reduce the heat generated during the wireless charging process needs to be solved.

In an embodiment of the present disclosure, in order to reduce the heat of the coil in the wireless charging process, a low charging power can be adopted. For example, the wireless charging apparatus 120 only outputs a highest charging power of 7.5W to charge the device 130 to be charged. In this charging method, the charging speed is slow, and it takes a long time to charge the device 130 to be charged to be full.

In some other embodiments, in order to accelerate the charging speed, when compared with the low charging power, the wireless charging apparatus 120 increases the charging power (e.g., 7.5W is increased to 10W) for the wireless charging. As described above, when the high power is used for the wireless charging, the heat of the coil or the heat of a conversion circuit 130 is inevitably generated. In the wireless charging system using the magnetic coupling manner, a distance between the wireless charging apparatus 120 and the device 130 to be charged is usually very short. The heating coil of the wireless charging apparatus 120 transfers the heat to the device 130 to be charged. For the device 130 to be charged, the heat generated by the coil and a conversion circuit is transferred to the battery to a certain extent, and the heat generated by the battery in the charging process causes the temperature of the battery to exceed a safe charging range easily. When the heat of the coil, the heat of the conversion circuit, and the heat of the battery exceed the safe range, it is necessary to return to the low charging power (e.g., 7.5W) or to stop charging to ensure the safety of the charging. Therefore, although this charging method increases a maximum charging power of the wireless charging, the duration of the charging with the maximum charging power is very short. The high power wireless charging is only in a short period of time and does not shorten the charging time to an expected length (e.g., less than 100 minutes).

Furthermore, in order to reduce the heat, heat dissipation technology, such as graphene or heat dissipation plates, can also be used for dissipating the heat in the charging process. However, the effect of the heat dissipation technology is not ideal, the cost of the product is increased, the internal space of the product is occupied, and the appearance of the product is affected.

To solve the above-mentioned problems, an embodiment of the present disclosure provides a wireless charging system. The wireless charging system can include a transmitting device for wireless charging signals (e.g., the above-mentioned wireless charging apparatus) and a receiving device for wireless charging signals (e.g., the above-mentioned device to be charged). The transmitting device for wireless charging signals and the receiving device for wireless charging signals can communicate wirelessly. A transmitting power of the transmitting device for wireless charging signals can be adjusted based on feedback information transmitted by the receiving device for wireless charging signals, so that the transmitting power of the transmitting device for wireless charging signals matches a currently required charging voltage and/or a currently required charging current of a battery. As such, according to the charging requirements of the receiving device for wireless charging signals, the wireless charging power can be increased, and the charging speed can be increased.

Secondly, in order to prevent an output current of a wireless receiving circuit from being large, the receiving device for wireless charging signal can also feed back the output current of the wireless receiving circuit. As such, the transmitting device for wireless charging signals can adjust the transmitting power based on the feedback information of the output current of the wireless receiving circuit, so that the output current of the wireless receiving circuit meets a predetermined condition.

The output current of the wireless receiving circuit is controlled by the transmitting device for wireless charging signals, so that the heat of a wireless transmitting circuit (including the transmitting coil) and the wireless receiving circuit (including the receiving coil) can be controlled, and the heat during the charging process can be reduced. Accordingly, when compared with the above-mentioned charging method, the duration of the high power wireless charging can be extended, the charging speed can be increased, and the charging time can be shortened.

A wireless charging method provided by an embodiment of the present disclosure can be applied to a wireless charging system. The wireless charging system can include a wireless charging apparatus, a device to be charged, and a power supply device. In detail, the power supply device can be an adapter, a power bank, a computer and so on. An output current of the power supply device can be a constant direct current, a pulsed direct current, or an alternating current. The wireless charging apparatus can be configured with a voltage conversion circuit, a wireless charging transmitting circuit, and a processor. The device to be charged can be configured with a wireless charging receiving circuit, a charging management module, and a processor. Further, in the wireless charging system, the wireless charging apparatus and the device to be charged can communicate wirelessly to implement data transmission.

In the wireless charging method provided by the embodiment of the present disclosure, the device to be charged adjusts, in real time, a transmitting power, a voltage, and a current of wireless charging according to a charging voltage of a battery and/or a charging current of the battery and an output current of the wireless charging receiving circuit, thereby controlling an output voltage of the wireless charging receiving circuit. The charging efficiency is increased while the heat of the wireless charging is controlled.

FIG. 2 illustrates an implementation of wireless charging in accordance with an embodiment of the present disclosure. As shown in FIG. 2, a wireless charging system 20 in the embodiment of the present disclosure includes a power supply device 210, a wireless charging apparatus 220, and a device 230 to be charged.

In the embodiment of the present disclosure, the power supply device 210 is configured to provide electrical energy for the wireless charging apparatus 220. The power supply device 210 can include a rectifier circuit, a conversion circuit, a control circuit, a charging interface and so on. The power supply device 210 can convert an alternating current input into a direct current output and provide the direct current output for the wireless charging apparatus 220. For example, the power supply device can be an adapter, a power bank, a car power supply and so on.

In the embodiment of the present disclosure, the power supply device 210 can also directly provide the alternating current for the wireless charging apparatus 220. For example, the power supply device 210 can be an alternating current power supply. When the power supply device 210 is the alternating current power source, the wireless charging apparatus 220 further includes a circuit or a module, for example, a rectifier filter circuit, a DC/DC conversion unit and so on, for converting the alternating current into the direct current.

The wireless charging apparatus 220 is configured to convert the direct current or the alternating current provided by the power supply device 210 into electromagnetic signals to perform power transmission in a wireless manner.

Further, as shown in FIG. 2, in the embodiment of the present disclosure, the wireless charging apparatus 220 can include a voltage conversion circuit 221, a wireless charging transmitting unit 222, and a first control unit 223. It can be understood by those skilled in the art that a structure of the wireless charging apparatus 220 shown in FIG. 2 does not constitute a limitation of the wireless charging apparatus, and can include more or fewer components than those shown in the figure. Alternatively, some components can be combined, or different components can be arranged.

It should be noted that the power supply device 210 can be a normal adapter, a voltage regulating adapter (that is, the adapter can adjust an output voltage itself), or even a power bank. When the power supply device 210 is the voltage regulating adapter, the wireless charging apparatus 220 can exclude the voltage conversion circuit 221. Herein, the voltage conversion circuit 221 is configured to perform a direct current/direct current (DC/DC) voltage conversion to mainly adjust the output voltage of the power supply device 101 to a fixed voltage value and provide the fixed voltage value to the wireless charging transmitting unit 222.

The wireless charging transmitting unit 222 is configured to convert the direct current provided by the voltage conversion circuit 221 or the direct current provided by the power supply device 210 into the alternating current which can be coupled to a transmitting coil, convert the alternating current into the electromagnetic signals via the transmitting coil, and transmit the electromagnetic signals.

In the embodiment of the present disclosure, the wireless charging transmitting unit 222 can include an inverter unit and a resonance unit. The inverter unit can include a plurality of switches. The transmitting power can be adjusted by controlling a turn-on time (i.e., a duty cycle) of each switch. The resonant unit is configured to transmit electrical energy. For example, the resonant unit can include a capacitor and a transmitting coil. The transmitting power of the wireless charging transmitting unit 222 can be adjusted by adjusting an operating frequency of the resonance unit.

In the embodiment of the present disclosure, the wireless charging apparatus 220 can be a wireless charging base, a device with an energy storage function and so on. When the wireless charging apparatus 220 is the device with the energy storage function, it also includes an energy storage module (e.g., a lithium battery 235), which can obtain the electrical energy from the external power supply device 210 and store the electrical energy. As such, the energy storage module can provide the electrical energy for the wireless charging transmitting unit 222. Those skilled in the art can understand that the wireless charging apparatus 220 can obtain the electrical energy from the external power supply device 210 in a wired manner or a wireless manner. In the wired manner, for example, a charging interface (e.g., a Type-C interface, a USB interface and so on) is connected to the power supply device 210 to obtain the electrical energy. In the wireless manner, for example, the wireless charging apparatus 220 can further include a wireless charging receiving unit 231, which can obtain electrical energy from a device with a wireless charging function via the wireless manner.

The first control unit 223 is configured to control the wireless charging process. For example, the first control unit 223 can communicate with the power supply device 210 to determine an output voltage and/or an output current of the power supply device. Alternatively, the first control unit 223 can also communicate with the device 230 to be charged to implement the interaction of charging information (e.g., voltage information of a battery 235, temperature information of the battery 235, charging mode information and so on) and to determine charging parameters (e.g., a charging voltage and/or a charging current) for performing the wireless charging.

Those skilled in the art can understand that the wireless charging apparatus 220 can also include other related hardware, logic devices, units, and/or codes to implement corresponding functions. For example, the wireless charging apparatus 220 can further include a display unit (e.g., a light emitting diode or an LED display screen) for displaying a charging status in real time in the wireless charging process (e.g., the charging proceeds or terminates). The embodiment of the present disclosure is not limited thereto.

In the embodiment of the present disclosure, as shown in FIG. 2, the device 230 to be charged includes a wireless charging receiving unit 231, a charging management module 232, a second control unit 233, a detecting unit 234, the battery 235, and a first charging channel 236. Those skilled in the art can understand that the structure of the device 230 to be charged shown in FIG. 2 does not constitute a limitation of the device to be charged. The device to be charged can include more or fewer components than those shown in the figure. Alternatively, some components can be combined, or different components can be arranged.

It should be noted that the power supply device 210 provides power for the wireless charging apparatus 220. The device 230 to be charged 230 is placed on one surface of the wireless charging apparatus 220, and the wireless charging apparatus 220 charges the battery 235 in the device 230 to be charged via electromagnetic induction. Herein, a wireless connection is established between the wireless charging apparatus 220 and the device 230 to be charged, and the wireless charging apparatus 220 and the device 230 can also communicate with each other.

In the embodiments of the present disclosure, a wireless communication method includes but is not limited to BLUETOOTH communication, Wireless Fidelity (WiFi) communication, short-range wireless communication based on a high carrier frequency, optical communication, ultrasonic communication, ultra-wideband communication, mobile communications and so on. The embodiment of present disclosure is not limited thereto.

The wireless charging receiving unit 231 is configured to convert, via a receiving coil, the electromagnetic signals transmitted by the wireless charging transmitting unit 222 of the wireless charging apparatus 220 into an alternating current, perform a rectifying operation and/or a filtering operation on the alternating current, and convert the alternating current into a stable direct current for charging the battery 235.

In the embodiment of the present disclosure, the wireless charging receiving unit 231 includes the receiving coil and an AC/DC conversion unit. The AC/DC conversion unit is configured to convert the alternating current received by the receiving coil into the direct current.

In the embodiment of the present disclosure, the battery 235 can include one cell or multiple cells. When the battery 235 includes the multiple cells, the multiple cells are connected in series. As a result, a charging voltage which the battery 235 can withstand is the sum of charging voltages which the multiple cells can withstand. Accordingly, the charging speed can be increased, and the heat of the charging can be reduced.

In the embodiment of the present disclosure, the first charging channel 236 can be a wire. The charging management module 232 can be disposed on the first charging channel 236.

The charging management module 232 is configured to perform a voltage boost operation or a voltage reduction operation on the direct current outputted by the wireless charging receiving unit 231 to obtain an output voltage and an output current of the first charging channel 236. In the embodiment of the present disclosure, a voltage value and a current value of the direct current outputted by the first charging channel 236 meet charging requirements of the battery 235 and can be directly loaded into the battery 235 for charging.

In the embodiment of the present disclosure, the charging management module 232 can include a second voltage conversion unit. The second voltage conversion unit can be a boost conversion circuit, a buck conversion circuit, a buck-boost conversion circuit, or an LDO voltage stabilizing circuit. Alternatively, the second voltage conversion unit can also be a charge pump conversion circuit or even a direct charging circuit. The embodiment of the present disclosure is not limited thereto.

The detecting unit 234 is configured to detect the voltage value and/or the current value of the first charging channel 236. The voltage value and/or the current value of the first charging channel 236 can refer to a voltage value and/or a current value between the wireless charging receiving unit 231 and the charging management module 232, that is, a voltage value and/or a current value outputted by the wireless charging receiving unit 231. Alternatively, the voltage value and/or current value of the first charging channel can also refer to a voltage value and/or a current value between the charging management module 232 and the battery 235, that is, an output voltage and/or an output current of the charging management module 232.

In the embodiment of the present disclosure, the detecting unit 234 can include a voltage detecting unit 234 and a current detecting unit 234. The voltage detecting unit 234 can be configured to sample the voltage of the first charging channel 236 and transmit a sampled voltage value to the second control unit 233. In the embodiment of the present disclosure, the voltage detecting unit 234 can sample the voltage of the first charging channel 236 in a series voltage divider manner. The current detecting unit 234 can be configured to sample the current of the first charging channel 236 and transmit a sampled current value to the second control unit 233. In the embodiment of the present disclosure, the current detecting unit 234 can sample and detect the current of the first charging channel 236 via a current sense resistor and a galvanometer.

The second control unit 233 is configured to communicate with the first control unit 223 of the wireless charging apparatus 220 and to feed back the voltage value and/or current value detected by the detecting unit 234 to the first control unit 223. Accordingly, the first control unit 223 can adjust the transmitting power of the wireless charging transmitting unit 222 according to the feedback voltage value and/or the current value, so that the voltage value and/or the current value of the direct current outputted by the first charging channel 236 can match the required charging voltage value and/or the required charging current of the battery 235.

It should be noted that matching the required charging voltage value and/or the required charging current of the battery 235 refers to that the voltage value and/or current value of the direct current outputted by the first charging channel 236 and the required charging voltage value and/or the required charging current of the battery 235 are the same or floated within a predetermined range (e.g., the voltage values are floated between 100 mV∼200 mV).

In the embodiment of the present disclosure, the second control unit 233 can be an independent microcontroller unit (MCU) in the device 230 to be charged, thereby improving the reliability of control. In the embodiment of the present disclosure, the second control unit 1033 can also be an application processor (AP) in the device 230 to be charged, thereby saving the hardware cost. The embodiment of the present disclosure is not limited thereto.

The technical solutions in the embodiments of the present disclosure are clearly and completely described in the following with reference to the accompanying drawings in the embodiments of the present disclosure.

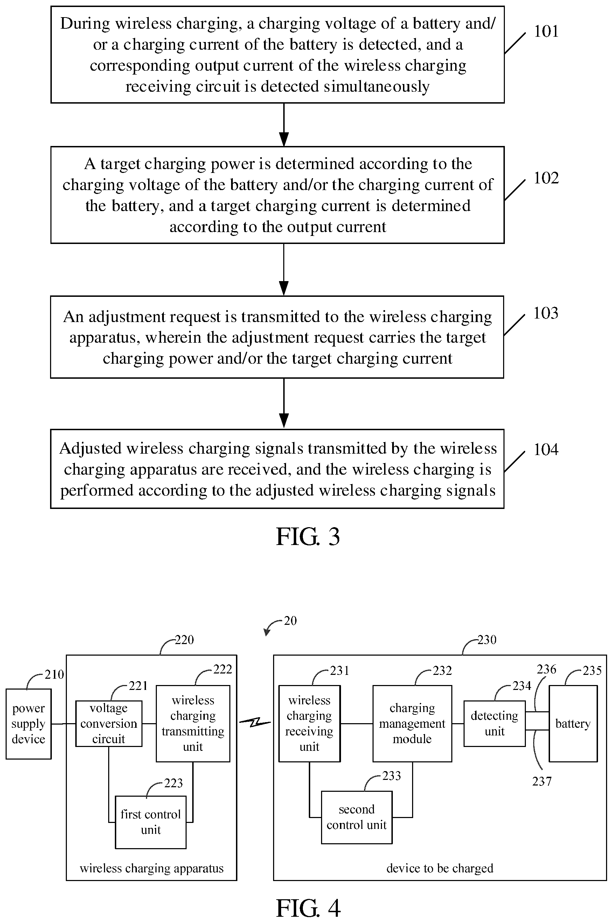

An embodiment of the present disclosure provides a wireless charging method applied to a device to be charged. The device to be charged is configured with a wireless charging receiving circuit. c. As shown in FIG. 3, in the embodiment of the present disclosure, the wireless charging method executed by the device to be charged can include the following steps.

In step 101, during wireless charging, a charging voltage of a battery and/or a charging current of the battery is detected, and a corresponding output current of the wireless charging receiving circuit is detected simultaneously.

In the embodiment of the present disclosure, when the device to be charged performs the wireless charging, the charging voltage of the battery and/or the charging current of the battery can be detected, and the corresponding output current of the wireless charging receiving circuit can be detected simultaneously.

Further, in the embodiment of the present disclosure, when the device to be charged performs the wireless charging, a charging state can be further detected and obtained. It should be noted that in the embodiment of the present disclosure, the charging state when the device to be charged performs the wireless charging can include trickle charging, constant current charging, or constant voltage charging.

Further, in the embodiment of the present disclosure, the device to be charged can also be configured with a battery. Accordingly, when the wireless charging is performed, the device to be charged can detect the battery to obtain the charging voltage of the battery and/or charging current of the battery.

It should be noted that in the embodiment of the present disclosure, the device to be charged can be a constitutive component of a wireless charging system. In detail, the wireless charging system can further include a wireless charging apparatus and a power supply device. The wireless charging apparatus wirelessly charges the device to be charged by establishing a wireless connection with the device to be charged. For example, the wireless charging apparatus can be a charging base. The power supply device can be configured to charge the wireless charging apparatus. In detail, the power supply device can be an adapter, a power supply and so on.

Based on FIG. 2, the wireless charging system can include the power supply device, the wireless charging apparatus, and the device to be charged. The wireless charging apparatus includes a voltage conversion circuit, a wireless charging transmitting circuit, and a first control unit. The device to be charged includes a wireless charging receiving circuit, a charging management module, a second control unit and the battery. The voltage conversion circuit is configured to perform a direct current/direct current voltage conversion to mainly adjust a first output voltage of the power supply device to a fixed voltage value and provide the fixed voltage value to the wireless charging transmitting unit. The charging management module includes a boost conversion unit, a buck conversion unit, a buck-boost conversion unit, a charge pump conversion unit, or a direct charging unit. The wireless charging transmitting circuit includes a transmitting coil, and the wireless charging receiving circuit includes a receiving coil. The fixed voltage value received by the wireless charging transmitting circuit can be transmitted via the electromagnetic induction between the transmitting coil and the receiving coil. The first control unit and the second control unit can be microcontroller units (MCUs), and the second control unit can also be implemented by an application processor (AP) on a terminal side. The embodiment of the present disclosure is not limited thereto.

It should be noted that the power supply device provides power for the wireless charging apparatus. In the meantime, the wireless communication technology is adopted between the wireless charging apparatus and the device to be charged, and the battery in the device to be charged is charged via the electromagnetic induction. In detail, the power supply device is connected to the voltage conversion circuit in the wireless charging apparatus. The voltage conversion circuit converts the first output voltage of the power supply device. The voltage conversion process is controlled by the first control unit, so that a second output voltage after the voltage conversion process enters the wireless charging transmitting circuit and is transmitted, by the wireless charging transmitting circuit, to the wireless charging receiving circuit via the electromagnetic induction. A third output voltage is obtained via the wireless charging receiving circuit. The charging management module performs a voltage stabilization operation, a voltage boost operation, or a voltage reduction operation on the third output voltage, and this process is controlled by the second control unit. The charging voltage and the charging current which are obtained after the conversion are used for charging the battery.

Further, in the embodiment of the present disclosure, the device to be charged is a terminal which can wirelessly communicate with the wireless charging apparatus. The device to be charged can be any terminal with communication and storage functions, such as a tablet computer, a mobile phone, an E-reader, a remote controller, a personal computer (PC), a laptop computer, an in-vehicle device, an internet television, a wearable device, a personal digital assistant (PDA), a portable media player (PMP), a navigation device and so on.

Further, in an implementation of the present disclosure, before the device to be charged performs the wireless charging, the device to be charged can establish the wireless connection with the wireless charging apparatus and perform bidirectional communication to implement the wireless charging.

Further, in the embodiment of the present disclosure, the power supply device can be configured to charge the wireless charging apparatus. In detail, the power supply device and the wireless charging apparatus can be connected via a universal serial bus (USB) interface. The USB interface can be a common USB interface, a micro USB interface, a Type C interface and so on. Power lines in the USB interface are configured to charge the wireless charging apparatus by the power supply device. The power lines in the USB interface can be a VBus line and/or a ground line in the USB interface. Data lines in the USB interface are configured to perform the bidirectional communication between the power supply device and the wireless charging apparatus. The data lines can be a D+ line and/or a D- line in the USB interface. The bidirectional communication can refer to bidirectional interaction of information performed between the power supply device and the wireless charging apparatus.

Further, in the embodiment of the present disclosure, the power supply device can support a normal charging mode and a quick charging mode. A charging current in the quick charging mode is greater than a charging current in the normal charge mode. That is, a charging speed in the quick charge mode is faster than a charging speed in the normal charge mode.

It should be noted that in the embodiment of the present disclosure, when the wireless charging system controls an output power of the wireless charging receiving circuit by adjusting an input voltage of the wireless charging transmitting circuit, a ratio of an output voltage of the wireless charging receiving circuit to the input voltage of the wireless charging transmitting circuit is basically 1:1 because a ratio of the transmitting coil to the receiving coil is 1:1. Accordingly, when the wireless charging is performed, an objective of adjusting the output voltage of the wireless charging receiving circuit can be achieved by directly adjusting the input voltage of the wireless charging transmitting circuit. That is, in a fixed-frequency mode of wireless charging, when an operating frequency of the wireless charging transmitting circuit of the wireless apparatus for wireless charging is fixed, adjusting the input voltage of the wireless charging transmitting circuit directly can implement to adjust the output voltage of the wireless charging receiving circuit.

In step 102, a target charging power is determined according to the charging voltage of the battery and/or the charging current of the battery, and a target charging current is determined according to the output current.

In the embodiment of the present disclosure, after detecting and obtaining the charging voltage of the battery and/or the charging current of the battery and the output current, the device to be charged can further determine the target charging power according to the charging voltage of the battery and/or the charging current of the battery and can further determine the target charging current according to the output current.

It should be noted that in the embodiment of the present disclosure, the device to be charged can obtain a predetermined parameter threshold value corresponding to a charging state firstly. Then, the charging voltage of the battery and/or the charging current of the battery is compared with the predetermined parameter threshold value to determine whether to perform the power adjustment. When it is determined that the power adjustment is required, the device to be charged can further determine the target charging power according to the charging voltage of the battery and/or the charging current of the battery. In detail, when the charging state is constant current charging, the device to be charged can obtain a predetermined current threshold value corresponding to the charging state firstly. Then, the target charging power can be further determined according to the predetermined current threshold value and the charging voltage of the battery.

It should be noted that in the embodiment of the present disclosure, the device to be charged can also obtain a predetermined output current range corresponding to the charge state according to the charge state. Then, the output current is compared with the predetermined output current range, thereby further determine whether to perform the power adjustment. When it is determined that the power adjustment is required, the device to be charged can determine the target charging current according to the output current.

Further, in the embodiment of the present disclosure, the device to be charged has to determine whether charging parameters of the battery can meet a set charging power, and has to determine whether the output current of the wireless charging receiving circuit can meet the predetermined current range. That is, in the wireless charging method provided by the present disclosure, when it is determined whether to perform the power adjustment, it is necessary to determine whether the charging efficiency can be ensured, and it is also necessary to determine whether a voltage difference of the charging management module is controlled within a smaller range.

It should be noted that in the embodiment of the present disclosure, after detecting and obtaining the charging voltage of the battery and/or the charging current of the battery and the output current, the device to be charged can directly transmit the charging state, the charging voltage of the battery and/or the charging current of the battery, and the output current to the wireless charging apparatus, so that the wireless charging apparatus further determines whether to perform the power adjustment.

That is, in the wireless charging system in the embodiment of the present disclosure, the device to be charged can determine whether to perform the power adjustment, or the wireless charging apparatus can further determine whether to perform the power adjustment.

Further, in the embodiment of the present disclosure, after determining the target charging power according to the charging voltage of the battery and/or the charging current of the battery, the device to be charged can also directly determine a current power according to the charging voltage of the battery and/or the charging current of the battery. In detail, the product of the charging voltage of the battery and the charging current of the battery is the current charging power.

Further, in the embodiment of the present disclosure, after the device to be charged separately determines the target charging power and the current charging power, a power difference can be determined according to the target charging power and the current charging power. The power difference can represent the amount of adjusted power when the adjustment is performed. In detail, the device to be charged can perform a difference calculation on the target charging power and the current charging power, thereby obtaining the power difference.

In step 103, an adjustment request is transmitted to the wireless charging apparatus, wherein the adjustment request carries the target charging power and/or the target charging current.

In the embodiment of the present disclosure, after determining the target charging power according to the charging voltage of the battery and/or the charging current of the battery and determining the target charging current according to the output current, the device to be charged can transmit the adjustment request to the wireless charging apparatus.

It should be noted that in the embodiment of the present disclosure, the adjustment request carries the target charging power and/or the target charging current.

Further, in an implementation of the present disclosure, after the device to be charged determines that the charging power needs to be adjusted, the device to be charged needs to adjust an input current and an input voltage corresponding to the wireless charging receiving circuit. Therefore, the device to be charged needs to transmit the adjustment request to the wireless charging apparatus, so that the wireless charging apparatus adjusts an input voltage and an input current corresponding to the wireless charging transmitting circuit to achieve the objective of adjusting an output voltage and an output current of the wireless charging transmitting circuit. Finally, the input current and the input voltage corresponding to the wireless charging receiving circuit are adjusted.

It should be noted that in the embodiment of the present disclosure, when the device to be charged and the wireless charging apparatus perform wireless communication, a method of the wireless communication includes one or more of the following communication methods: BLUETOOTH communication, wireless local area network (Wireless Fidelity, Wi-Fi) communication, short-range wireless communication based on a high carrier frequency, optical communication, ultrasonic communication, ultra-wideband communication, mobile communication and so on.

Further, in the embodiment of the present disclosure, when the output current does not exceed the predetermined output current range, the device to be charged need not feed back the target charging current and only feeds back the target charging power. In this situation, it is necessary to store the current threshold value, a voltage threshold value, and the predetermined output current range corresponding to the charge state in the wireless charging apparatus, so that the current and the voltage do not exceed the threshold values when the power is adjusted.

It should be noted that in the embodiment of the present disclosure, when the device to be charged transmits the adjustment request to the wireless charging apparatus, the adjustment request can also carry the current charging power and the power difference.

In step 104, adjusted wireless charging signals transmitted by the wireless charging apparatus are received, and the wireless charging is performed according to the adjusted wireless charging signals.

In the embodiment of the present disclosure, after transmitting the adjustment request to the wireless charging apparatus, the device to be charged can receive the adjusted wireless charging signals transmitted by the wireless charging apparatus and used for responding to the adjustment request, and perform the wireless charging according to the adjusted wireless charging signals.

It should be noted that in the embodiment of the present disclosure, after determining the adjusted wireless charging signals, the wireless charging apparatus can transmit the adjusted wireless charging signals to the device to be charged. In the meantime, the device to be charged can receive the adjusted wireless charging signals via the wireless charging receiving circuit and perform the wireless charging according to the adjusted wireless charging signals.

Further, in the embodiment of the present disclosure, after receiving the adjusted wireless charging signals, the wireless charging receiving circuit of the device to be charged can output the corresponding target output voltage and the corresponding target output current. Then, the charging management module converts the target output voltage and the target output current for charging the battery.

It should be noted that in the embodiment of the present disclosure, a voltage difference between the target output voltage and the converted output voltage of the charging management module can be small, so as to avoid defects of decreasing conversion efficiency and increasing temperature due to a large voltage difference.

Further, in the embodiment of the present disclosure, before the wireless charging apparatus and the device to be charged perform the wireless charging, the device to be charged can determine a charging mode with the wireless charging apparatus via wireless communication firstly. The wireless charging mode can include a first predetermined wireless charging mode and a second predetermined wireless charging mode. In detail, a charging speed of the first predetermined wireless charging mode is faster than a charging speed of the second predetermined wireless charging mode.

Optionally, in the embodiment of the present disclosure, when the wireless charging apparatus and the device to be charged perform the wireless charging, the wireless charging transmitting unit can support the first predetermined wireless charging mode and the second predetermined wireless charging mode. The charging speed of charging the device to be charged by the wireless charging transmitting unit in the first predetermined wireless charging mode unit is faster than the charging speed of charging the device to be charged by the wireless charging transmitting unit in the second predetermined wireless charging mode. In other words, when compared with the wireless charging transmitting unit operating in the second predetermined wireless charging mode, the required time for charging the battery in the device to be charged to the same capacity by the wireless charging transmitting unit operating in the first predetermined wireless charging mode is shorter.

In the embodiment of the present disclosure, the second predetermined wireless charging mode can be a normal wireless charging mode, for example, can be a traditional wireless charging mode based on QI standard, PMA standard, or A4WP standard. The first predetermined wireless charging mode can be a quick wireless charging mode. The normal wireless charging mode can refer to a wireless charging mode in which a transmitting power of the wireless charging transmitting unit is small (usually less than 15W, and a commonly used transmitting power is 5W or 10W). In the normal wireless charging mode, it usually takes several hours to fully charge a large-capacity battery (e.g., a battery with a capacity of 3000mAh). In the quick wireless charging mode, a transmitting power of the wireless charging transmitting unit is relatively large (usually greater than or equal to 15W). When compared with the normal wireless charging mode, the time for charging the battery in the device to be charged to the same capacity in the quick wireless charging mode is shorter and the charging speed is faster.

Based on FIG. 2, FIG. 4 illustrates another implementation of wireless charging in accordance with an embodiment of the present disclosure. As shown in FIG. 4, in the embodiment of the present disclosure, the device to be charged further includes a second charging channel 237. The second charging channel 237 can be a wire. A conversion circuit can be disposed on the second charging channel 237 and configured to perform voltage control on a direct current outputted by the wireless charging receiving unit to obtain an output voltage and an output current of the second charging channel 237 for charging the battery.

In the embodiment of the present disclosure, the conversion circuit can include a circuit for voltage stabilization. The circuit for voltage stabilization is connected to the wireless charging receiving unit.

In the embodiment of the present disclosure, when the second charging channel is used for charging the battery, the wireless charging transmitting unit can adopt a constant transmitting power. After the wireless charging receiver unit receives the electromagnetic signals and the electromagnetic signals are processed, by the conversion circuit, to be a voltage and a current which meet requirements for charging the battery, the voltage and the current are inputted to the battery to charge the battery. It should be understood that in the embodiment of the present disclosure, the constant transmitting power does not necessarily mean that the transmitting power completely remains unchanged. The transmitting power can vary within a certain range. For example, the transmitting power is 7.5W and floated between +0.5W and -0.5W.

In the embodiment of the present disclosure, the second control circuit is further configured to compare a detected output voltage value of the second charging channel with a predetermined target value (for example, an actually required voltage value of the battery) to determine an error value. Then, the error value is transmitted to the first controller in the form of a data packet. The output voltage value of the second charging channel can be a voltage value and/or a current value between the conversion circuit and the battery.

In the embodiment of the present disclosure, when the battery is charged via the second charging channel, the wireless charging apparatus and the device to be charged can perform the wireless charging according to Qi standard. Therefore, a data signal containing the error value can be coupled to a coil of the wireless charging receiving unit, transmitted to a coil of the wireless charging transmitting unit by means of signal modulation, and then transmitted to the first controller.

In the embodiment of the present disclosure, when the battery is charged via the second charging channel, a wireless electrical energy transmitting control process can include: comparing, by the second control circuit, the detected output voltage value of the second charging channel with the predetermined target value to determine the error value, and then transmitting the error value to the first controller in the form of the data packet; and determining, by the first controller, the difference according to the current value of the transmitting coil and the information in the error data packet, and setting a new operating frequency according to the difference to adjust the transmitting power of the wireless charging transmitting unit.

In the embodiment of the present disclosure, a charging method for charging the battery via the first charging channel is a first charging mode, and a method for charging the battery via the second charging channel is a second charging mode. The wireless charging apparatus and the device to be charged can determine to adopt the first charging mode or the second charging mode to charge the battery via handshake communication. That is, in the embodiment of the present disclosure, when the device to be charged is wirelessly charged according to the charging voltage and the charging current, the device to be charged can be charged via the first charging channel corresponding to the first charging mode according to the charging voltage and the charging current. Alternatively, the device to be charged can be charged via the second charging channel corresponding to the second charging mode according to the charging voltage and the charging current.

In the embodiment of the present disclosure, in the wireless charging apparatus, when the device to be charged is charged via the first charging mode, a maximum transmitting power of the wireless charging transmitting unit can be a first transmitting power value. When the device to be charged is charged via the second charging mode, a maximum transmitting power of the wireless charging transmitting unit can be a second transmitting power value. The first transmitting power value is greater than the second transmitting power value. Accordingly, the charging speed of charging the device to be charged in the first charging mode is faster than the charging speed of charging the device to be charged in the second charging mode.

In the embodiment of the present disclosure, in the device to be charged, the second control circuit switches between the first charging channel and the second charging channel according to the charging mode. When the first charging mode is adopted, the second control circuit controls a buck circuit in the first charging channel to work. When the second charging mode is adopted, the second control circuit controls the conversion circuit in the second charging channel to work.

Further, in the embodiment of the present disclosure, the device to be charged is further configured with the battery. The battery is a one-cell battery or a multi-cell battery. The multi-cell battery is constituted by a plurality of cells which are connected in series.

In the embodiment of the present disclosure, the battery of the device to be charged can include one cell or can include N cells connected in series. N is a positive integer greater than 1. Taking N=2 as an example, the battery can include a first cell and a second cell, and the first cell and the second cell are connected in series with each other. Taking the charging power equal to 20W and the charging voltage of one cell equal to 5V as an example. In order to meet the requirement of the charging voltage of the two series cells, the output voltage/the output current of the first charging channel should be maintained at 10V/2A. In this way, the wireless transmitting circuit generates electromagnetic signals based on 10V/2A. Correspondingly, the wireless receiving circuit converts the electromagnetic signals into the output voltage/the output current of 10V/2A. Since the current is reduced from 4A to 2A, the heat generated in the electrical energy transmitting process is reduced accordingly. Therefore, in the embodiment of the present disclosure, multiple cells connected in series can be used for reducing the heat generated by the wireless charging transmitting circuit and the wireless charging receiving circuit.

Further, in the embodiment of the present disclosure, the value of N can also be 3 or a positive integer greater than 3. When the cells which are connected in series are more, the heat generated by the wireless charging transmitting circuit and the wireless charging receiving circuit is less.

In the embodiment of the present disclosure, in order to ensure the charging speed and further alleviate the heating phenomenon of the wireless charging signal receiving device 230, an internal structure of the battery of the wireless charging signal receiving device 230 in the embodiment of the present disclosure is further modified by disposing the multiple cells which are connected in series. When compared with the scheme of the one cell, the charging current of the multiple cells is 1/N of the charging current of the one cell if the charging speeds of the one cell and the multiple cells have to reach the same (N is the number of the multiple cells which are connected in series in the wireless charging signal receiving device). In other words, under the premise of ensuring the same charging speed, the charging current in the embodiment of the present disclosure can reduce significantly, thereby further reducing the heat generated by the wireless charging signal receiving device during the charging process.

In the embodiment of the present disclosure, the multiple cells can be cells with the same or similar specification and parameter. The cells with the same or similar specification are conveniently managed. Selecting the cells with the same or similar specification and parameter can increase the overall performance and the service life of the multi-cell battery.

In the embodiment of the present disclosure, during the charging process, the electrical energy outputted by the first charging channel or the second charging channel is used for charging the multiple cells which are connected in series. In the power providing process, a buck circuit can be used for reducing the voltage of the multi-cell battery to provide system power for the wireless charging signal receiving device. Alternatively, the one cell can be used for providing system power.

In the embodiment of the present disclosure, in order to maintain the balance of electric quantity of the multiple cells, during the charging and discharging process, the multiple cells can be balanced by an equalization circuit. The equalization circuit can be implemented in various methods. For example, a load can be connected at both ends of at least one of the multiple cells to consume the power of the at least one of the multiple cells, so that the electric quantity of the at least one of the multiple cells is consistent with the electric quantity of the rest of the multiple cells and thus all of the multiple cells have the same electric quantity. Alternatively, one of the multiple cells having high electric quantity can charge one of the multiple cells having low until the voltages of all of the multiple cells are the same.

Further, in the embodiment of the present disclosure, as described above, the charging process of the battery can include one or more of a trickle charging stage, a constant current charging stage, and a constant voltage charging stage. In the embodiment of the present disclosure, in order to further increase the charging speed, the charging time in the constant voltage charging stage is shortened or the constant voltage charging stage is eliminated by controlling the charging voltage and the charging current. Therefore, when compared with the charging process in the related art, the charging speed can be improved significantly.

It should be noted that in the embodiment of the present disclosure, after the device to be charged performs the wireless charging according to the adjusted wireless charging signals, the device to be charged can detect a current charging state and a current voltage of the battery firstly. When the charging state is constant voltage charging and the current voltage of the battery is greater than or equal to a predetermined cutoff voltage, the device to be charged can be charged according to a predetermined limited voltage and a pre-stored current parameter sequence.

It should be noted that in the embodiment of the present disclosure, the predetermined cutoff voltage is smaller than the predetermined limited voltage. The pre-stored current parameter sequence includes current parameters I1, 12, 13..., and In of which values are decreased sequentially. N is a natural number greater than or equal to 1.

In the embodiment of the present disclosure, the predetermined limited voltage is set to be higher than the predetermined cutoff voltage of the battery, and the pre-stored current parameter sequence [I1, I2, I3,..., In] is set where I1 ≥ I2 ≥ I3....... It should be understood that the predetermined limited voltage is related to the battery, such as a system, used materials and so on. In the embodiment of the present disclosure, when the predetermined cutoff voltage of the battery is V0 and the predetermined limited voltage is Vn, Vn can be set to V0+ΔV. For example, a value of ΔV can be ranged between 0.05V and 0.1V. The values of the charging current I1, I2,..., and In can also be related to the battery, such as a system, used materials and so on.

In the embodiment of the present disclosure, after the system of the battery is determined, the capacity of the battery is determined. According to the relationship of the charging voltage, the charging current, the charging time, and the capacity of the battery, the charging currents in different stages can be determined when the charging voltage is equal to the predetermined limited voltage. In the embodiment of the present disclosure, a different value between two adjacent charging currents in I1, I2, 13..., and In can be set as ΔI. For example, a value of ΔI can be ranged between 100mA and 1A.

In the embodiment of the present disclosure, regardless of adopting the first charging channel or the second charging channel, when the charging voltage of the battery is charged to the predetermined cutoff voltage, the battery is charged by a constant current with the charging current I1 until the charging voltage of the battery reaches the predetermined limited voltage. Since the battery is charged by the constant current with the current I1, the voltage drops after the charging stops. Therefore, the battery is charged with a constant current with the current 12 until the charging voltage of the battery reaches the predetermined limited voltage. The above steps are repeated until the charging current In in the last step is used for charging the battery to the predetermined limited voltage. Then, the charging stops. Accordingly, by setting the predetermined limited voltage and the charging currents in each stage, the constant voltage charging stage in the related technology can be omitted, and the charging time can be saved significantly.

That is, in the embodiment of the present disclosure, when the charging voltage of the battery is charged to the predetermined cutoff voltage, the battery is charged via a plurality of charging stages. Each of the charging stages corresponds to a charging current. A charging current corresponding to a former one of two adjacent ones of the charging stages is greater than a charging current corresponding to a latter one of the two adjacent ones of the charging stages. Each of the charging stages uses the corresponding charging current to charge the battery to the limited voltage. The limited voltage is greater than the predetermined cutoff voltage of the battery. When the charging stages are completed, the battery stops charging.

In the embodiment of the present disclosure, regardless of adopting the first charging channel or the second charging channel, when the charging voltage of the battery is charged to the predetermined cutoff voltage, the battery is charged by a constant current with the charging current I1 until the battery reaches the predetermined limited voltage. Then, the battery is charged with a constant current with the current I2 until the charging voltage of the battery reaches the predetermined limited voltage. The above steps are repeated until the charging current In in the last step is used for charging the battery to the predetermined limited voltage. Vn is served as the charging voltage. When a predetermined time of constant voltage charging or a current to be charged is decreased to a predetermined value, the battery stops charging. When compared with the embodiment of omitting the constant voltage charging stage, the present embodiment can increase the cutoff voltage and decrease the duration of the constant voltage charging. Accordingly, when compared with the related technology, the charging time can be saved significantly.

That is, in the embodiment of the present disclosure, when the charging voltage of the battery is charged to the predetermined cutoff voltage, the battery is charged via a plurality of charging stages. Each of the charging stages corresponds to a charging current. A charging current corresponding to a former one of two adjacent ones of the charging stages is greater than a charging current corresponding to a latter one of the two adjacent ones of the charging stages. Each of the charging stages uses the corresponding charging current to charge the battery to the limited voltage. The limited voltage is greater than the predetermined cutoff voltage of the battery. The battery is charged by the limited voltage in the constant voltage charging. The battery stops charging until the charging current of the battery reaches a target cutoff current in the constant voltage charging or a charging duration reaches a predetermined duration.

In the embodiment of the present disclosure, when the battery has multiple cells, it is necessary to monitor that the voltage of each of the multiple cells reaches the predetermined cutoff voltage and the limited voltage in the above-mentioned method. When the voltage of any of the multiple cells reaches the predetermined cutoff voltage or the limited voltage, a conversion operation of the charging current is performed. Alternatively, in the embodiment of the present disclosure, a charging path of one of the multiple cells which reaches the predetermined cutoff voltage or the limited voltage can also be disconnected, and the cell which does not reach the predetermined cutoff voltage or the limited voltage is charged. That is, the charging operation according to the above-mentioned charging process can be independently perform on each of the multiple cells.

An embodiment of the present disclosure provides a wireless charging method. The wireless charging method is applied to a device to be charged. The device to be charged is configured with a wireless charging receiving circuit. The wireless charging method includes: during wireless charging, detecting a charging voltage of a battery and/or a charging current of the battery, and detecting a corresponding output current of the wireless charging receiving circuit simultaneously; determining a target charging power according to the charging voltage of the battery and/or the charging current of the battery, and determining a target charging current according to the output current; transmitting an adjustment request to a wireless charging apparatus, wherein the adjustment request carries the target charging power and/or the target charging current; and receiving adjusted wireless charging signals transmitted by the wireless charging apparatus, and performing the wireless charging according to the adjusted wireless charging signals. It can be seen that in the embodiment of the present disclosure, the device to be charged determines the target charging power and target charging current according to the charging voltage of the battery and/or the charging current of the battery and the output current of the wireless charging receiving circuit, determines the target charging power and the target charging current, transmits the adjustment request carrying the target charging power and/or the target charging current to the wireless charging apparatus, receives the adjusted wireless charging signals transmitted by the wireless charging apparatus, and performs the wireless charging according to the adjusted wireless charging signals, thereby implementing the adjustment of the charging power. In the method of feeding back the charging voltage of the battery and/or the charging current of the battery and the output current of the wireless charging receiving circuit to the wireless charging apparatus to adjust the charging power in real time, not only higher charging efficiency can be obtained by feeding back the charging parameters of the battery, but also a lower voltage difference can be ensured by feeding back the output current of the wireless charging receiving circuit. Accordingly, when the wireless charging apparatus and the device to be charged perform the wireless charging, the wireless charging efficiency can be increased significantly while the heat problem of charging is solved.

Based on the above-mentioned embodiment, in another embodiment of the present disclosure, when the charging state is constant current charging, the method of determining the target charging power according to the charging voltage of the battery and/or the charging current of the battery can include the following steps.

In step 102a, a predetermined current threshold value corresponding to the charging state is obtained.

In the embodiment of the present disclosure, when the charging state is the constant current charging, the device to be charged can obtain the predetermined current threshold value corresponding to the charging state after detecting and obtaining the charging voltage of the battery and/or the charging current of the battery.

Further, in the embodiment of the present disclosure, the predetermined current threshold can be used for increasing the charging efficiency of the battery. The predetermined output current range can be used for reducing the voltage difference of the charging management module, so as to improve the charging efficiency and reduce the heat generation.

It should be noted that in the embodiment of the present disclosure, the device to be charged can pre-establish a corresponding relationship of the charging state and the charging voltage of the battery and/or the charging current threshold value and a corresponding relationship of the charging state and the output current range.

Further, in the embodiment of the present disclosure, for different charging states, the device to be charged can set different charging voltages of the battery and/or the charging current threshold values of the battery, and can also set different output current threshold values.

In step 102b, the target charging power is determined according to the predetermined current threshold value and the charging voltage of the battery.

In the embodiment of the present disclosure, when the charging state is the constant current charging, the device to be charged can further determine the target charging power after detecting and obtaining the charging current of the battery and obtaining the predetermined current threshold value.

It should be noted that in the embodiment of the present disclosure, the device to be charged can perform a product operation on the charging voltage of the battery and the predetermined current threshold value, so as to obtain the target charging power.

It should be noted that in the embodiment of the present disclosure, the device to be charged can compare the charging current of the battery with the predetermined current threshold value. In the meantime, the output current can be compared with the predetermined output current range, so as to further determine whether to perform the power adjustment based on the above-mentioned two comparison results.

Further, in an implementation of the present disclosure, when the charging current of the battery is smaller than the predetermined current threshold value, the device to be charged can determine that the charging current of the battery cannot meet the predetermined requirement of the charging power and thus the power adjustment is required.

Further, in an implementation of the present disclosure, when the output current does not belong to the predetermined output current range, the device to be charged can determine that the output current cannot meet the predetermined requirement of the charging power and cannot meet the predetermined requirement of a low voltage difference. Accordingly, the power adjustment is required because the heat may be generated.

It should be noted that in the embodiment of the present disclosure, after the device to be charged compares the charging current of the battery with the predetermined current threshold value and compares the output current with the predetermined output current range, the device to be charged can determine that the power adjustment is required when the charging current of the battery is smaller than the predetermined current threshold value and the output current does not belong to the predetermined output current range. When the charging current of the battery is greater than or equal to the predetermined current threshold value or the output current belongs to the predetermined output current range, the device to be charged can determine that the power adjustment is not required.

In the embodiment of the present disclosure, when the charging state is constant voltage charging, the method of determining the target charging power according to the charging voltage of the battery and/or the charging current of the battery can include the following steps.

In step 102c, a predetermined voltage threshold value corresponding to the charging state is obtained.

In the embodiment of the present disclosure, when the charging state is the constant voltage charging, the device to be charged can obtain the predetermined voltage threshold value corresponding to the charging state after detecting and obtaining the charging voltage of the battery and/or the charging current of the battery.

Further, in the embodiment of the present disclosure, the predetermined voltage threshold can be used for improving the charging efficiency of the battery.

In step 102d, the target charging power is determined according to the predetermined voltage threshold value and the charging current of the battery.

In the embodiment of the present disclosure, when the state of charge is the constant voltage charging, the device to be charged can further determine the target charging power according to the predetermined voltage threshold value and the charging current of the battery after detecting and obtaining the charging voltage of the battery and obtaining the predetermined voltage threshold value.

It should be noted that in the embodiment of the present disclosure, the device to be charged can perform a product operation on the charging current of the battery and the predetermined voltage threshold value, so as to obtain the target charging power.

It should be noted that in the embodiment of the present disclosure, the device to be charged can compare the charging voltage of the battery with the predetermined voltage threshold value. In the meantime, the output current is compared with the predetermined output current range, so as to further determine whether to perform the power adjustment based on the above-mentioned two comparison results.

Further, in an implementation of the present disclosure, when the charging voltage of the battery is smaller than the predetermined voltage threshold value, the device to be charged can determine that the charging voltage of the battery cannot meet the predetermined requirement of the charging power and thus the power adjustment is required.

Further, in an implementation of the present disclosure, when the output current does not belong to the predetermined output current range, the device to be charged can determine that the output current cannot meet the predetermined requirement of the charging power and cannot meet the predetermined requirement of a low voltage difference. Accordingly, the power adjustment is required because the heat may be generated.

It should be noted that in the embodiment of the present disclosure, after the device to be charged compares the charging voltage of the battery with the predetermined voltage threshold value and compares the output current with the predetermined output current range, the device to be charged can determine that the power adjustment is required when the charging voltage of the battery is smaller than the predetermined voltage threshold value and the output current does not belong to the predetermined output current range. When the charging voltage of the battery is greater than or equal to the predetermined voltage threshold value or the output current belongs to the predetermined output current range, the device to be charged can determine that the power adjustment is not required.

In the embodiment of the present disclosure, the device to be charged is further configured with a charging management module. The method of performing the wireless charging by the device to be charged include the following steps.

In step 201, the wireless charging receiving circuit outputs a target output current and a target output voltage according to the wireless charging signals.

In an implementation of the present disclosure, after receiving the wireless charging signals transmitted by the wireless charging apparatus, the wireless charging receiving circuit can output the target data current and the target data voltage according to the wireless charging signals.

Further, in the embodiment of the present disclosure, after receiving the wireless charging signals, the wireless charging receiving circuit of the device to be charged can output the target output voltage and the target output current according to the charging voltage and the charging current to transmit the target output voltage and the target output current to the charging management module of the device to be charged.

In step 202, the battery is charged after the charging management module converts the target output current and the target output voltage.

In the embodiment of the present disclosure, after the charging management module of the device to be charged converts the target charging current and the target output voltage, the battery can be charged.

It should be noted that in the embodiment of the present disclosure, after receiving the target output current and the target output voltage transmitted by the wireless charging receiving circuit, the charging management module can convert the target output current and the target output voltage to obtain a converted charging current and a converted charging voltage, and then output the converted charging current and the converted charging voltage to the battery to complete the charging of the battery.

An embodiment of the present disclosure provides a wireless charging method. The wireless charging method is applied to a device to be charged. The device to be charged is configured with a wireless charging receiving circuit. The wireless charging method includes: during wireless charging, detecting a charging voltage of a battery and/or a charging current of the battery, and detecting a corresponding output current of the wireless charging receiving circuit simultaneously; determining a target charging power according to the charging voltage of the battery and/or the charging current of the battery, and determining a target charging current according to the output current; transmitting an adjustment request to a wireless charging apparatus, wherein the adjustment request carries the target charging power and/or the target charging current; and receiving adjusted wireless charging signals transmitted by the wireless charging apparatus, and performing the wireless charging according to the adjusted wireless charging signals. It can be seen that in the embodiment of the present disclosure, the device to be charged determines the target charging power and target charging current according to the charging voltage of the battery and/or the charging current of the battery and the output current of the wireless charging receiving circuit, transmits the adjustment request carrying the target charging power and/or the target charging current to the wireless charging apparatus, receives the adjusted wireless charging signals transmitted by the wireless charging apparatus, and performs the wireless charging according to the adjusted wireless charging signals, thereby implementing the adjustment of the charging power. In the method of feeding back the charging voltage of the battery and/or the charging current of the battery and the output current of the wireless charging receiving circuit to the wireless charging apparatus to adjust the charging power in real time, not only higher charging efficiency can be obtained by feeding back the charging parameters of the battery, but also a lower voltage difference can be ensured by feeding back the output current of the wireless charging receiving circuit. Accordingly, when the wireless charging apparatus and the device to be charged perform the wireless charging, the wireless charging efficiency can be increased significantly while the heat problem of charging is solved.

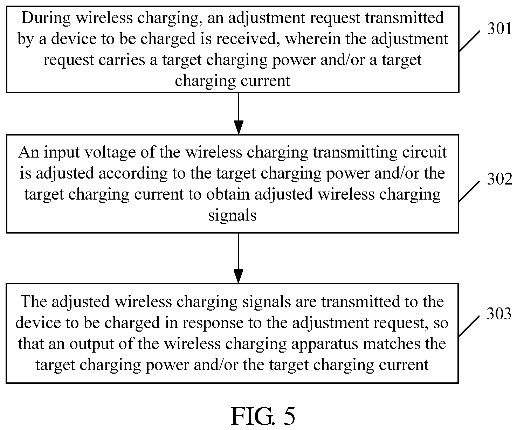

An embodiment of the present disclosure provides a wireless charging method applied to a wireless charging apparatus. FIG. 5 illustrates an implementation flowchart of a wireless charging method provided by another embodiment of the present disclosure. As shown in FIG. 5, in the embodiment of the present disclosure, the wireless charging method performed by the wireless charging apparatus can include the following steps.

In step 301, during wireless charging, an adjustment request transmitted by a device to be charged is received, wherein the adjustment request carries a target charging power and/or a target charging current.

In the embodiment of the present disclosure, when performing the wireless charging, the wireless charging apparatus can receive the adjustment request transmitted by the device to be charged.

It should be noted that in an implementation of the present disclosure, the adjustment request carries the target charging power and/or the target charging current required by the device to be charged.

Further, in an implementation of the present disclosure, the adjustment request can further carry a current charging power and a power difference.

It should be noted that in the embodiment of the present disclosure, when the wireless charging apparatus performs the wireless charging, a charging state can be detected and determined. The charging state can include trickle charging, constant current charging, or constant voltage charging.

It should be noted that in the embodiments of the present disclosure, the wireless charging apparatus can be a constitutive component of a wireless charging system. In detail, the wireless charging system can further include the wireless charging apparatus and a power supply device. The wireless charging apparatus wirelessly charges the device to be charged by establishing a wireless connection with the device to be charged. For example, the wireless charging apparatus can be a charging base. The power supply device can be configured to charge the wireless charging apparatus. The power supply device can be an adapter, a power supply and so on.

As shown in FIG. 2 above, the wireless charging system can include the power supply device, the wireless charging apparatus, and the device to be charged. The wireless charging apparatus includes a voltage conversion circuit, a wireless charging transmitting circuit, and a first control unit. The device to be charged includes a wireless charging receiving circuit, a charging management module, a second control unit, and a battery.

Further, in an implementation of the present disclosure, before the wireless charging apparatus performs the wireless charging, the device to be charged can establish the wireless connection with the wireless charging apparatus and perform bidirectional communication to implement the wireless charging.

Further, in the embodiment of the present disclosure, the power supply device can be configured to charge the wireless charging apparatus. In detail, the power supply device and the wireless charging apparatus can be connected via a universal serial bus (USB) interface. The USB interface can be a common USB interface, a micro USB interface, a Type C interface and so on. Power lines in the USB interface are configured to charge the wireless charging apparatus by the power supply device. The power lines in the USB interface can be a VBus line and/or a ground line in the USB interface. Data lines in the USB interface are configured to perform the bidirectional communication between the power supply device and the wireless charging apparatus. The data lines can be a D+ line and/or a D- line in the USB interface. The bidirectional communication can refer to bidirectional interaction of information between the power supply device and the wireless charging apparatus.

It should be noted that in the embodiment of the present disclosure, when the device to be charged and the wireless charging apparatus perform wireless communication, a method of the wireless communication includes one or more of the following communication methods: BLUETOOTH communication, Wi-Fi communication, short-range wireless communication based on a high carrier frequency, optical communication, ultrasonic communication, ultra-wideband communication, mobile communication and so on.

In step 302, an input voltage of the wireless charging transmitting circuit is adjusted according to the target charging power and/or the target charging current to obtain adjusted wireless charging signals.

In the embodiment of the present disclosure, after receiving the adjustment request transmitted by the device to be charged, the wireless charging apparatus can further adjust the input voltage of the wireless charging transmitting circuit according to the target charging power and/or the target charging current to obtain the adjusted wireless charging signal.

Further, in the embodiments of the present disclosure, the wireless charging apparatus has to determine whether charging parameters of the battery can meet a set charging power, and has to determine whether an output current of the wireless charging receiving circuit of the device to be charged can meet a predetermined current range. That is, in the wireless charging method provided by the present disclosure, when it is determined whether to perform the power adjustment, it is necessary to ensure that the charging efficiency can be increased, and it is also necessary to perform voltage difference control on the charging management module of the device to be charged.

Further, in the embodiment of the present disclosure, the wireless charging signals can include the target charging power, the target charging voltage, and the target charging current.

Further, in the embodiment of the present disclosure, after receiving the adjustment request transmitted by the device to be charged, the wireless charging apparatus can further adjust, according to the target charging power and/or the target charging current, the current charging power, and the power difference, the input voltage of the wireless charging transmitting circuit to obtain the adjusted wireless charging signals.

In step 303, the adjusted wireless charging signals are transmitted to the device to be charged in response to the adjustment request, so that an output of the wireless charging apparatus matches the target charging power and/or the target charging current.

In the embodiment of the present disclosure, after determining the wireless charging signals, the wireless charging apparatus can transmit, in response to the adjustment request, the adjusted wireless charging signals to the device to be charged via the wireless charging transmitting circuit, so that the output of the wireless charging apparatus matches the target charging power and/or the target charging current.

It should be noted that in the embodiment of the present disclosure, after determining the wireless charging signals, the wireless charging apparatus needs to control the configured voltage conversion circuit to adjust the output voltage and the output current of the voltage conversion circuit, so that the voltage and the current inputted to the wireless charging transmitting circuit meet the wireless charging signals.

Further, in the embodiment of the present disclosure, after obtaining the wireless charging feedback of the device to be charged, the wireless charging apparatus can control the voltage conversion circuit according to the feedback to adjust the output voltage and the output current of the voltage conversion circuit. That is, the input voltage and the input current of the wireless charging transmitting circuit are adjusted to implement the power adjustment when the device to be charged is wirelessly charged, so that the output of the wireless charging apparatus matches the target charging power and/or the target charging current.

Further, in the embodiment of the present disclosure, before the wireless charging apparatus and the device to be charged perform the wireless charging, the device to be charged can determine a charging mode with the wireless charging apparatus via wireless communication. The wireless charging mode can include a first predetermined wireless charging mode and a second predetermined wireless charging mode. In detail, a charging speed of the first predetermined wireless charging mode is faster than a charging speed of the second predetermined wireless charging mode.

Optionally, in the embodiment of the present disclosure, when the wireless charging apparatus and the device to be charged perform the wireless charging, the wireless charging transmitting unit can support the first predetermined wireless charging mode and the second predetermined wireless charging mode. The charging speed of charging the device to be charged by the wireless charging transmitting unit in the first predetermined wireless charging mode unit is faster than the charging speed of charging the device to be charged by the wireless charging transmitting unit in the second predetermined wireless charging mode. In other words, when compared with the wireless charging transmitting unit operating in the second predetermined wireless charging mode, the required time for charging the battery in the device to be charged to the same capacity by the wireless charging transmitting unit operating in the first predetermined wireless charging mode is shorter.

In the embodiment of the present disclosure, the second predetermined wireless charging mode can be a normal wireless charging mode, for example, can be a traditional wireless charging mode based on QI standard, PMA standard, or A4WP standard. The first predetermined wireless charging mode can be a quick wireless charging mode. The normal wireless charging mode can refer to a wireless charging mode in which a transmitting power of the wireless charging transmitting unit is small (usually less than 15W, and a commonly used transmitting power is 5W or 10W). In the normal wireless charging mode, it usually takes several hours to fully charge a large-capacity battery (e.g., a battery with a capacity of 3000mAh). In the quick wireless charging mode, the transmitting power of the wireless charging transmitting unit is relatively large (usually greater than or equal to 15W). When compared with the normal wireless charging mode, the time for charging the battery in the device to be charged to the same capacity in the quick wireless charging mode is shorter and the charging speed is faster.

It should be noted that in an implementation of the present disclosure, when outputting the charging voltage and the charging current to the device to be charged according to the wireless charging signals, the wireless charging apparatus can output the charging voltage and the charging current to the device to be charged according to the wireless charging signals via the first predetermined wireless charging mode. Alternatively, the wireless charging apparatus can output the charging voltage and the charging current to the device to be charged according to the wireless charging signals via the second predetermined wireless charging mode.

An embodiment of the present disclosure provides a wireless charging method. The wireless charging method is applied to a wireless charging apparatus. The wireless charging apparatus is configured with a wireless charging transmitting circuit. The wireless charging method includes: receiving, by the wireless charging apparatus, an adjustment request transmitted by a device to be charged, wherein the adjustment request carries a target charging power and/or a target charging current; adjusting, according to the target charging power and/or the target charging current, an input voltage of the wireless charging transmitting circuit to obtain adjusted wireless charging signals; and transmitting, in response to the adjustment request, the adjusted wireless charging signals to the device to be charged, so that an output of the wireless charging apparatus matches the target charging power and/or the target charging current. It can be seen that in the embodiment of the present disclosure, the wireless charging apparatus determines the wireless charging signals according to the charging state and the target charging power and/or the target charging current carried by the adjustment request outputted by the device to be charged, and then outputs the wireless charging signals to the device to be charged via the wireless charging transmitting circuit to implement the power adjustment. In the method of adjusting the charging power according to the feedback of the charging voltage of the battery and/or the charging current of the battery and the output current of the wireless charging transmitting circuit, not only higher charging efficiency can be obtained by feeding back the charging parameters of the battery, but also a lower voltage difference can be ensured by feeding back the output current of the wireless charging receiving circuit. Accordingly, when the wireless charging apparatus and the device to be charged perform the wireless charging, the wireless charging efficiency can be increased significantly while the heat problem of charging is solved.

Based on the above-mentioned embodiment, the wireless charging apparatus is further configured with the voltage conversion circuit in yet another embodiment of the present disclosure. The method of adjusting, by the wireless charging apparatus, the input voltage of the wireless charging transmitting circuit according to the target charging power and/or the target charging current to obtain the adjusted wireless charging signals can specifically include: controlling the voltage conversion circuit to obtain the adjusted wireless charging signals according to the target charging power and/or the target charging current.

In the embodiment of the present disclosure, after obtaining the target charging power and/or the target charging current, the wireless charging apparatus can control the voltage conversion circuit according to the target charging power and/or the target charging current, thereby obtaining the adjusted wireless charging signals.

It should be noted that in the embodiment of the present disclosure, the wireless charging apparatus can receive a voltage and a current transmitted by the power supply device via the voltage conversion circuit, and the voltage conversion circuit can convert the received current and the received voltage to obtain the output current and the output voltage.

Further, in the embodiment of the present disclosure, after receiving the adjustment request of the device to be charged, the wireless charging apparatus determines the target charging power and/or the target charging current, and then controls the voltage conversion circuit to adjust the converted voltage and the converted current according to the target charging power and/or the target charging current, thereby obtaining the adjusted wireless charging signals of the wireless transmitting circuit.

In the embodiment of the present disclosure, after the wireless charging apparatus obtains the adjusted wireless charging signals, the wireless charging transmitting circuit can output the wireless charging signals to the device to be charged.

Further, in the embodiment of the present disclosure, after determining the target charging power and/or the target charging current according to the wireless charging feedback of the device to be charged, the wireless charging apparatus can control the voltage conversion circuit according to the target charging power and/or the target charging current to adjust the output voltage and the output current of the voltage conversion circuit, that is, to adjust the input voltage and the input current of the wireless charging transmitting circuit, thereby implementing the power adjustment when the device to be charged performs the wireless charging.

An embodiment of the present disclosure provides a wireless charging method. The wireless charging method is applied to a wireless charging apparatus. The wireless charging apparatus is configured with a wireless charging transmitting circuit. The wireless charging method includes: receiving, by the wireless charging apparatus, an adjustment request transmitted by a device to be charged, wherein the adjustment request carries a target charging power and/or a target charging current; adjusting, according to the target charging power and/or the target charging current, an input voltage of the wireless charging transmitting circuit to obtain adjusted wireless charging signals; and transmitting, in response to the adjustment request, the adjusted wireless charging signals to the device to be charged, so that an output of the wireless charging apparatus matches the target charging power and/or the target charging current. It can be seen that in the embodiment of the present disclosure, the wireless charging apparatus determines the wireless charging signals according to the charging state and the target charging power and/or the target charging current carried by the adjustment request outputted by the device to be charged, and then outputs the wireless charging signals via the wireless charging transmitting circuit to implement the power adjustment. In the method of adjusting the charging power according to the feedback of the charging voltage of the battery and/or the charging current of the battery and the output current of the wireless charging transmitting circuit, not only higher charging efficiency can be obtained by feeding back the charging parameters of the battery, but also a lower voltage difference can be ensured by feeding back the output current of the wireless charging receiving circuit. Accordingly, when the wireless charging apparatus and the device to be charged perform the wireless charging, the wireless charging efficiency can be increased significantly while the heat problem of charging is solved.

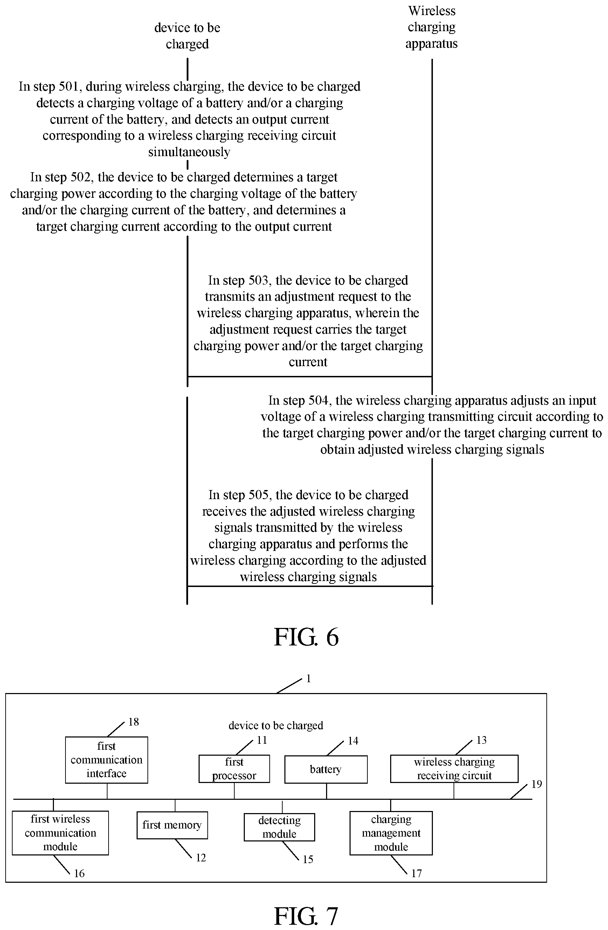

Based on the above-mentioned embodiment, an embodiment of the present disclosure provides a wireless charging method applied to a device to be charged and a wireless charging apparatus in a wireless charging system. FIG. 6 illustrates an implementation flowchart of a wireless charging method provided by yet another embodiment of the present disclosure. As shown in FIG. 6, in the embodiment of the present disclosure, the wireless charging method performed by the wireless charging apparatus and the device to be charged can include the following steps.

In step 501, during wireless charging, the device to be charged detects a charging voltage of a battery and/or a charging current of the battery, and detects an output current corresponding to a wireless charging receiving circuit simultaneously.

In the embodiment of the present disclosure, when performing the wireless charging, the device to be charged can detect the charging voltage of the battery and/or the charging current of the battery, and detects the output current corresponding to the wireless charging receiving circuit simultaneously.

It should be noted that in the embodiment of the present disclosure, a charging state when the device to be charged performs the wireless charging can include trickle charging, constant current charging, or constant voltage charging.

It should be noted that in the embodiments of the present disclosure, the device to be charged can be a constitutive component of the wireless charging system. In detail, the wireless charging system can further include the wireless charging apparatus and a power supply device. The wireless charging apparatus wirelessly charges the device to be charged by establishing a wireless connection with the device to be charged.

In step 502, the device to be charged determines a target charging power according to the charging voltage of the battery and/or the charging current of the battery, and determines a target charging current according to the output current.

In the embodiment of the present disclosure, after detecting and obtaining the charging voltage of the battery and/or the charging current of the battery and the output current, the device to be charged can determine the target charging power according to the charging voltage of the battery and/or the charging current of the battery and can determine the target charging current according to the output current.

Further, in the embodiment of the present disclosure, the device to be charged has to determine whether charging parameters of the battery can meet a set charging power, and has to determine whether the output current of the wireless charging receiving circuit can meet a predetermined current range. That is, in the wireless charging method provided by the present disclosure, when it is determined whether to perform the power adjustment, it is necessary to determine whether the charging efficiency can be ensured, and it is also necessary to determine whether a voltage difference of a charging management module is controlled within a smaller range.

In step 503, the device to be charged transmits an adjustment request to the wireless charging apparatus, wherein the adjustment request carries the target charging power and/or the target charging current.

In the embodiment of the present disclosure, when it is determined to perform the power adjustment, the device to be charged can transmit the adjustment request to the wireless charging apparatus.

It should be noted that in the embodiment of the present disclosure, the adjustment request carries the target charging power and/or the target charging current.

In step 504, the wireless charging apparatus adjusts an input voltage of a wireless charging transmitting circuit according to the target charging power and/or the target charging current to obtain adjusted wireless charging signals.

In the embodiment of the present disclosure, after receiving the adjustment request transmitted by the device to be charged, the wireless charging apparatus can further adjust the input voltage of the wireless charging transmitting circuit according to the target charging power and/or the target charging current to obtain the adjusted wireless charging signals.

Further, in the embodiments of the present disclosure, the wireless charging apparatus has to determine whether charging parameters of the battery can meet a set charging power, and has to determine whether an output current of the wireless charging receiving circuit of the device to be charged can meet a predetermined current range. That is, in the wireless charging method provided by the present disclosure, when it is determined whether to perform the power adjustment, it is necessary to ensure that the charging efficiency can be increased, and it is also necessary to perform voltage difference control on the charging management module of the device to be charged.

It should be noted that, in the embodiment of the present disclosure, after obtaining the target charging power and/or the target charging current, the wireless charging apparatus needs to control a configured voltage conversion circuit to adjust an output voltage and an output current of the voltage conversion circuit, so that the voltage and the current inputted to the wireless charging transmitting circuit meet the target charging power and/or the target charging current.

In step 505, the device to be charged receives the adjusted wireless charging signals transmitted by the wireless charging apparatus and performs the wireless charging according to the adjusted wireless charging signals.

In the embodiment of the present disclosure, after transmitting the adjustment request to the wireless charging apparatus, the device to be charged can receive the adjusted wireless charging signals transmitted by the wireless charging apparatus, and can perform the wireless charging according to the adjusted wireless charging signals.

It should be noted that in the embodiment of the present disclosure, after determining the wireless charging signals, the wireless charging apparatus can output the wireless charging signals to the device to be charged via the wireless charging transmitting circuit.

An embodiment of the present disclosure provides a wireless charging method. The wireless charging method is applied to a device to be charged and a wireless charging apparatus. The device to be charged is configured with a wireless charging receiving circuit. The wireless charging method includes: detecting, by the device to be charged, a charging voltage of a battery and/or a charging current of the battery, and detecting an output current corresponding to the wireless charging receiving circuit simultaneously; determining a target charging power according to the charging voltage of the battery and/or the charging current of the battery, and determining a target charging current according to the output current; transmitting an adjustment request to the wireless charging apparatus, wherein the adjustment request carries the target charging power and/or the target charging current; and receiving adjusted wireless charging signals transmitted by the wireless charging apparatus, and performing the wireless charging according to the adjusted wireless charging signals. It can be seen that in the embodiment of the present disclosure, the device to be charged determines the target charging power and target charging current according to the charging voltage of the battery and/or the charging current of the battery and the output current of the wireless charging receiving circuit, transmits the adjustment request carrying the target charging power and/or the target charging current to the wireless charging apparatus, receives adjusted wireless charging signals transmitted by the wireless charging apparatus, and performs the wireless charging according to the adjusted wireless charging signals, thereby implementing the power adjustment. In the method of feeding back the charging voltage of the battery and/or the charging current of the battery and the output current of the wireless charging receiving circuit to the wireless charging apparatus to adjust the charging power in real time, not only higher charging efficiency can be obtained by feeding back the charging parameters of the battery, but also a lower voltage difference can be ensured by feeding back the output current of the wireless charging receiving circuit. Accordingly, when the wireless charging apparatus and the device to be charged perform the wireless charging, the wireless charging efficiency can be increased significantly while the heat problem of charging is solved.

Based on the above-mentioned embodiment, in yet another embodiment of the present disclosure, FIG. 7 illustrates a structural diagram of a device 1 to be charged provided by an embodiment of the present disclosure. As shown in FIG. 7, the device 1 to be charged provided by the embodiment of the present disclosure can include a first processor 11, a first memory 12 storing instructions executable by the first processor 11, a wireless charging receiving circuit 13, a battery 14, a detecting module 15, a first wireless communication module 16, and a charging management module 17.

The detecting module 15 is configured to, during wireless charging, detect a charging voltage of the battery and/or a charging current of the battery, and detect an output current corresponding to the wireless charging receiving circuit simultaneously.

The first processor 11 is configured to determine a target charging power according to the charging voltage of the battery and/or the charging current of the battery, and determine a target charging current according to the output current.

The first wireless communication module 16 is configured to transmit an adjustment request to a wireless charging apparatus, wherein the adjustment request carries the target charging power and/or the target charging current.

The wireless charging receiving circuit 13 is configured to receive adjusted wireless charging signals transmitted by the wireless charging apparatus, and perform wireless charging according to the adjusted wireless charging signals.

Further, in the embodiment of the present disclosure, after determining the target charging power according to the charging voltage of the battery and/or the charging current of the battery, the first processor 11 is further configured to: determine a current charging power according to the charging voltage of the battery and/or the charging current of the battery; and determine a power difference according to the target charging power and the current charging power.

Further, in the embodiment of the present disclosure, the adjustment request further carries the current charging power and the power difference.

Further, in the embodiment of the present disclosure, the detecting module 15 is further configured to detect a charging state.

Further, in the embodiment of the present disclosure, the first processor 11 is specifically configured to: obtain a predetermined current threshold value corresponding to the charging state, when the charging state is constant current charging; and determine the target charging power according to the predetermined current threshold value and the charging voltage of the battery.

The first processor 11 is specifically configured to: obtain a predetermined voltage threshold value corresponding to the charging state, when the charging state is constant voltage charging; and determine the target charging power according to the predetermined voltage threshold value and the charging current of the battery.

Further, in the embodiment of the present disclosure, the wireless charging receiving circuit 13 is specifically configured to output a target output current and a target output voltage according to the wireless charging signals.

The charging management module 17 is specifically configured to charge the battery 14 after converting the target output current and the target output voltage.

Further, in the embodiment of the present disclosure, the wireless charging receiving circuit 13 is configured to determine a charging mode with the wireless charging apparatus via wireless communication. The charging mode includes a first predetermined wireless charging mode and a second predetermined wireless charging mode. A charging speed of the first predetermined wireless charging mode is faster than a charging speed of the second predetermined wireless charging mode.

Further, in the embodiment of the present disclosure, the battery 14 is charged according to the first predetermined wireless charging mode, or the battery 14 is charged according to the second predetermined wireless charging mode.

Correspondingly, the battery 14 is charged via a first charging channel corresponding to the first predetermined wireless charging mode, or the battery 14 is charged via a second charging channel corresponding to the second preset wireless charging mode.

Further, in the embodiment of the present disclosure, the battery 14 is a one-cell battery or a multi-cell battery. The multi-cell battery is constituted by a plurality of cells which are connected in series. Correspondingly, when the multi-cell battery provides power, a voltage reduction operation is performed on an output voltage of the multi-cell battery.

Further, in the embodiment of the present disclosure, in a wireless charging process, the battery is charged via a plurality of charging stages when the charging voltage of the battery is charged to a predetermined cutoff voltage. Each of the charging stages corresponds to a charging current. A charging current corresponding to a former one of two adjacent ones of the charging stages is greater than a charging current corresponding to a latter one of the two adjacent ones of the charging stages. Each of the charging stages uses the corresponding charging current to charge the battery to a limited voltage. The limited voltage is greater than the predetermined cutoff voltage of the battery. The battery stops charging when the charging stages are completed.

Further, in the embodiment of the present disclosure, in a wireless charging process, the battery is charged via a plurality of charging stages when the charging voltage of the battery is charged to a predetermined cutoff voltage. Each of the charging stages corresponds to a charging current. A charging current corresponding to a former one of two adjacent ones of the charging stages is greater than a charging current corresponding to a latter one of the two adjacent ones of the charging stages. Each of the charging stages uses the corresponding charging current to charge the battery to a limited voltage. The limited voltage is greater than the predetermined cutoff voltage of the battery. The battery is charged by the limited voltage in a constant voltage method. The battery stops charging until the charging current of the battery reaches a target cutoff current target in the constant voltage charging or a charging duration reaches a predetermined duration.

In the embodiment of the present disclosure, the first processor 11 can be at least one of: an application specific integrated circuit (ASIC), a digital signal processor (DSP), a digital signal processing device (DSPD), a programmable logic device (PLD), a field programmable gate array (FPGA), a central processing unit (CPU), a controller, a microcontroller, or a microprocessor. It can be understood that for different devices, an electronic component for implementing the functions of the processor can be other devices. The embodiment of the present disclosure is not limited thereto. The first memory 12 is configured to store executable program codes. The executable program codes include computer operating instructions. The first memory 12 can include a high-speed RAM memory and can further include a non-volatile memory, for example, at least two magnetic disk memories.

In the embodiment of the present disclosure, the device to be charged can further include a first communication interface 18 and a first bus 19. The first bus 19 is configured to connect mutual communications among the first communication interface 18, the first processor 11, and the first memory 12.

In the embodiment of the present disclosure, the first memory 12 is configured to store instructions and data.

An embodiment of the present disclosure provides a device to be charged. The device to be charged is configured with a wireless charging receiving circuit. During the wireless charging, a charging voltage of a battery and/or a charging current of the battery is detected, and a corresponding output current of the wireless charging receiving circuit is detected simultaneously. A target charging power is determined according to the charging voltage of the battery and/or the charging current of the battery, and a target charging current is determined according to the output current. An adjustment request is transmitted to a wireless charging apparatus. The adjustment request carries the target charging power and/or the target charging current. Adjusted wireless charging signals transmitted by the wireless charging apparatus are received, and the wireless charging is performed according to the adjusted wireless charging signals. It can be seen that in the embodiment of the present disclosure, the device to be charged determines the target charging power and target charging current according to the charging voltage of the battery and/or the charging current of the battery and the output current of the wireless charging receiving circuit, transmits the adjustment request carrying the target charging power and/or the target charging current to the wireless charging apparatus, receives the adjusted wireless charging signals transmitted by the wireless charging apparatus, and performs the wireless charging according to the adjusted wireless charging signals, thereby implementing the power adjustment. In the method of feeding back the charging voltage of the battery and/or the charging current of the battery and the output current of the wireless charging receiving circuit to the wireless charging apparatus to adjust the charging power in real time, not only higher charging efficiency can be obtained by feeding back the charging parameters of the battery, but also a lower voltage difference can be ensured by feeding back the output current of the wireless charging receiving circuit. Accordingly, when the wireless charging apparatus and the device to be charged perform the wireless charging, the wireless charging efficiency can be increased significantly while the heat problem of charging is solved.

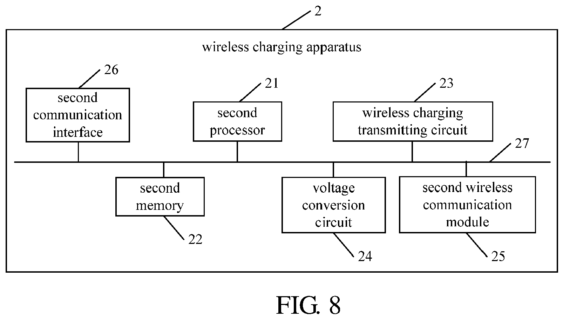

Based on the above-mentioned embodiment, in yet another embodiment of the present disclosure, FIG. 8 illustrates a structural diagram of a wireless charging apparatus 2 provided by an embodiment of the present disclosure. As shown in FIG. 8, the wireless charging apparatus 2 provided by the embodiment of the present disclosure can include a second processor 21, a second memory 22 storing instructions executable by the second processor 21, a wireless charging transmitting circuit 23, a voltage conversion circuit 24, and a second wireless communication module 25. Further, the wireless charging apparatus 2 can also include a second communication interface 26 and a second bus 27 for connecting the second processor 21, the second memory 22, and the second communication interface 26.

The second wireless communication module 25 is configured to, during wireless charging, receive an adjustment request transmitted by a device to be charged. The adjustment request carries a target charging power and/or a target charging current.

The second processor 21 is configured to adjust, according to the target charging power and/or the target charging current, an input voltage of the wireless charging transmitting circuit to obtain adjusted wireless charging signals.

The wireless charging transmitting circuit 23 is configured to, in response to the adjustment request, transmit the adjusted wireless charging signals to the device to be charged, so that an output of the wireless charging apparatus matches the target charging power and/or the target charging current.

Further, in the embodiment of the present disclosure, the adjustment request further carries a current charging power and a power difference.

Further, in the embodiment of the present disclosure, after receiving the adjustment request transmitted by the device to be charged, the second processor 21 is further configured to adjust, according to the target charging power and/or the target charging current, the current charging power, and the power difference, the input voltage of the wireless charging transmitting circuit to obtain the adjusted wireless charging signals.

Further, in the embodiment of the present disclosure, the second processor 21 is specifically configured to control, according to the target charging power and/or the target charging current, to obtain the adjusted wireless charging signals.

Further, in the embodiment of the present disclosure, the wireless charging transmitting circuit 23 is further configured to determine a charging mode with the device to be charged via wireless communication. The wireless charging mode includes a first predetermined wireless charging mode and a second predetermined wireless charging mode. A charging speed of the first predetermined wireless charging mode is faster than a charging speed of the second predetermined wireless charging mode.

Further, in the embodiment of the present disclosure, the wireless charging transmitting circuit 23 is specifically configured to: transmit the adjusted wireless charging signals to the device to be charged according to the first predetermined wireless charging mode; or transmit the adjusted wireless charging signals to the device to be charged according to the second predetermined wireless charging mode.

In the embodiment of the present disclosure, the second processor 21 can be at least one of: an application specific integrated circuit (ASIC), a digital signal processor (DSP), a digital signal processing device (DSPD), a programmable logic device (PLD), a field programmable gate array (FPGA), a central processing unit (CPU), a controller, a microcontroller, or a microprocessor. It can be understood that for different devices, an electronic component for implementing the functions of the processor can be other devices. The embodiment of the present disclosure is not limited thereto. The second memory 22 is configured to store executable program codes. The executable program codes include computer operating instructions. The second memory 22 can include a high-speed RAM memory and can further include a non-volatile memory, for example, at least two magnetic disk memories.

In the embodiment of the present disclosure, the second bus 27 is configured to connect mutual communications among the second communication interface 26, the second processor 21, and the second memory 22.

In the embodiment of the present disclosure, the second memory 22 is configured to store instructions and data.

An embodiment of the present disclosure provides a wireless charging apparatus. The wireless charging apparatus is configured with a wireless charging transmission circuit. During wireless charging, the adjustment request transmitted by a device to be charged is received. The adjustment request carries a target charging power and/or a target charging current. An input voltage of the wireless charging transmitting circuit is adjusted, according to the target charging power and/or the target charging current, to obtain adjusted wireless charging signals. The adjusted wireless charging signals are transmitted, in response to the adjustment request, to the device to be charged, so that an output of the wireless charging apparatus matches the target charging power and/or the target charging current. It can be seen that in the embodiment of the present disclosure, the wireless charging apparatus determines the wireless charging signals according to a charging state and the target charging power and/or the target charging current carried by the adjustment request outputted by the device to be charged, and then outputs the wireless charging signals via the wireless charging transmitting circuit to implement the power adjustment. In the method of adjusting the charging power according to the feedback of the charging voltage of the battery and/or the charging current of the battery and the output current of the wireless charging transmitting circuit, not only higher charging efficiency can be obtained by feeding back the charging parameters of the battery, but also a lower voltage difference can be ensured by feeding back the output current of the wireless charging receiving circuit. Accordingly, when the wireless charging apparatus and the device to be charged perform the wireless charging, the wireless charging efficiency can be increased significantly while the heat problem of charging is solved.

In practical applications, each of the above-mentioned memories can be a volatile memory (such as a first random access memory (RAM)), a first non-volatile memory (such as a first read-only memory (ROM), a first flash memory, a hard disk drive (HDD), a solid-state drive (SSD)), or a combination of the above-mentioned types of the first memories, and can provide instructions and data for a processor.

Furthermore, various functional modules in the embodiment may be integrated into one processing unit, or each unit may be physically presented separately, or two or more units may be integrated into one unit. The integrated unit may be implemented by hardware or a software functional module.

The integrated unit of the present disclosure may be stored in a computer-readable storage medium if implemented in the form of a software functional module and sold or used as an independent product. Based on this understanding, the solution provided by the embodiment substantially, or the part contributing to the existing art, or all or part of the technical solutions may be embodied in the form of a software product. The computer software product is stored in a storage medium and includes a plurality of instructions for enabling a computer device (which may be a personal computer, a server, or a network device) or a processor to execute all or part of the steps in the methods provided by the embodiments. The above-mentioned storage medium may be a USB flash disk, a mobile hard disk, a read only memory (ROM), a random access memory (RAM), a magnetic disk, an optical disk or another medium that can store program codes.

Embodiments of the present disclosure provide a first computer readable storage medium and a second computer readable storage medium on which programs are stored. The programs are executed by a processor to implement any one of the wireless charging methods.

In detail, the program instructions corresponding to the wireless charging method in each embodiment can be stored on a storage medium such as an optical disk, a hard disk, a USB flash drives and so on. When the program instructions corresponding to the wireless charging method and stored on the storage medium are read or executed by an electronic device, the program instructions include the following steps:
during wireless charging, detecting a charging voltage of a battery and/or a charging current of the battery, and detecting a corresponding output current of the wireless charging receiving circuit simultaneously;
determining a target charging power according to the charging voltage of the battery and/or the charging current of the battery, and determining a target charging current according to the output current;
transmitting an adjustment request to a wireless charging apparatus, wherein the adjustment request carries the target charging power and/or the target charging current; and
receiving adjusted wireless charging signals transmitted by the wireless charging apparatus, and performing the wireless charging according to the adjusted wireless charging signals.

When the program instructions corresponding to the wireless charging method and stored on the storage medium are read or executed by an electronic device, the program instructions include the following steps:
during wireless charging, receiving an adjustment request transmitted by a device to be charged, wherein the adjustment request carries a target charging power and/or a target charging current;
adjusting, according to the target charging power and/or the target charging current, an input voltage of the wireless charging transmitting circuit to obtain adjusted wireless charging signals; and
transmitting, in response to the adjustment request, the adjusted wireless charging signals to the device to be charged, so that an output of the wireless charging apparatus matches the target charging power and/or the target charging current.

Those skilled in the art should understand that the embodiments of the present disclosure can be provided as a method, a system, or a computer program product. Therefore, the present disclosure can adopt the form of a hardware embodiment, a software embodiment, or an embodiment combining software and hardware. Moreover, the present disclosure can adopt the form of a computer program product implemented on one or more computer usable storage media (including but not limited to a disk storage, an optical storage and so on) containing computer usable program codes.

The solution of an embodiment of the present invention is described herein with reference to flowcharts and/or block diagrams of a method, an apparatus (system), and a computer program product according to the embodiments of the invention. It should be understood that each flow and/or block in the flowchart and/or block diagram, and a combination of flow and/or block in the flowchart and/or block diagram may be implemented by computer program instructions. These computer program instructions may be provided to a general-purpose computer, a special-purpose computer, an embedded processor or a processor of other programmable data processing apparatus to form a machine, such that devices for implementing functions specified by one or more flows in a flowchart and/or one or more blocks in a block diagram may be generated by executing the instructions with the processor of the computer or other programmable data processing apparatus.

These computer program instructions may also be stored in a computer readable memory that can direct a computer or other programmable data processing apparatus to function in a particular manner, such that the instructions stored in the computer readable memory produce a manufactured article including an instruction device, the instruction device implementing the functions specified by one or more flows in a flowchart and/or one or more blocks in a block diagram.

The computer program instructions may also be loaded into a computer or other programmable data processing apparatus, such that a series of process steps may be executed on the computer or other programmable data processing apparatus to produce a process implemented by the computer, and thereby, the instructions executed on the computer or other programmable data processing apparatus provide steps of the functions specified by one or more flows in a flowchart and/or one or more blocks in a block diagram.

The above descriptions are merely preferred embodiments of the present disclosure and are not intended to limit the protection scope of the present disclosure.

### INDUSTRIAL APPLICABILITY

The embodiments of the present disclosure provide a wireless charging method, a device to be charged, a wireless charging apparatus, and a storage medium. The wireless charging method is applied to a device to be charged. The device to be charged is configured with a wireless charging receiving circuit. The wireless charging method includes: during wireless charging, detecting a charging voltage of a battery and/or a charging current of the battery, and detecting a corresponding output current of the wireless charging receiving circuit simultaneously; determining a target charging power according to the charging voltage of the battery and/or the charging current of the battery, and determining a target charging current according to the output current; transmitting an adjustment request to a wireless charging apparatus, wherein the adjustment request carries the target charging power and/or the target charging current; and receiving adjusted wireless charging signals transmitted by the wireless charging apparatus, and performing the wireless charging according to the adjusted wireless charging signals. It can be seen that in the embodiment of the present disclosure, the device to be charged determines the target charging power and target charging current according to the charging voltage of the battery and/or the charging current of the battery and the output current of the wireless charging receiving circuit, transmits the adjustment request carrying the target charging power and/or the target charging current to the wireless charging apparatus, receives the adjusted wireless charging signals transmitted by the wireless charging apparatus, and performs the wireless charging according to the adjusted wireless charging signals, thereby implementing the power adjustment. In the method of feeding back the charging voltage of the battery and/or the charging current of the battery and the output current of the wireless charging receiving circuit to the wireless charging apparatus to adjust the charging power in real time, not only higher charging efficiency can be obtained by feeding back the charging parameters of the battery, but also a lower voltage difference can be ensured by feeding back the output current of the wireless charging receiving circuit. Accordingly, when the wireless charging apparatus and the device to be charged perform the wireless charging, the wireless charging efficiency can be increased significantly while the heat problem of charging is solved.

## Claims

1. A wireless charging method, being applied to a device to be charged, the device to be charged being configured with a wireless charging receiving circuit, the method comprising:
during wireless charging, detecting a charging voltage of a battery and/or a charging current of the battery, and detecting a corresponding output current of the wireless charging receiving circuit simultaneously;
determining a target charging power according to the charging voltage of the battery and/or the charging current of the battery, and determining a target charging current according to the output current;
transmitting an adjustment request to a wireless charging apparatus, wherein the adjustment request carries the target charging power and/or the target charging current; and
receiving adjusted wireless charging signals transmitted by the wireless charging apparatus, and performing the wireless charging according to the adjusted wireless charging signals.

2. The method of claim 1, wherein after the determining the target charging power according to the charging voltage of the battery and/or the charging current of the battery, the method further comprises:
determining a current charging power according to the charging voltage of the battery and/or the charging current of the battery; and
determining a power difference according to the target charging power and the current charging power.

3. The method of claim 2, wherein the adjustment request further carries the current charging power and the power difference.

4. The method of claim 1, before the detecting the charging voltage of the battery and/or the charging current of the battery during the wireless charging, and detecting the corresponding output current of the wireless charging receiving circuit simultaneously, the method further comprises:
detecting a charging state.

5. The method of claim 4, wherein when the charging state is constant current charging, the determining the target charging power according to the charging voltage of the battery and/or the charging current of the battery comprises:
obtaining a predetermined current threshold value corresponding to the charging state; and
determining the target charging power according to the predetermined current threshold value and the charging voltage of the battery.

6. The method of claim 4, when the charging state is constant voltage charging, the determining the target charging power according to the charging voltage of the battery and/or the charging current of the battery comprises:
obtaining a predetermined voltage threshold value corresponding to the charging state; and
determining the target charging power according to the predetermined voltage threshold value and the charging current of the battery.

7. The method of claim 1, wherein the device to be charged is further configured with a charging management module, and the performing the wireless charging according to the adjusted wireless charging signals comprises:
outputting, by the wireless charging receiving circuit, a target output current and a target output voltage according to the wireless charging signals; and
charging the battery after converting, by the charging management module, the target output current and the target output voltage.

8. The method of claim 1, wherein before the wireless charging, the method further comprises:
determining a charging mode with the wireless charging apparatus via wireless communication, wherein the wireless charging mode includes a first predetermined wireless charging mode and a second predetermined wireless charging mode, and a charging speed of the first predetermined wireless charging mode is faster than a charging speed of the second predetermined wireless charging mode.

9. The method of claims 7 and 8, wherein the charging the battery comprises:
charging the battery according to the first predetermined wireless charging mode; or
charging the battery according to the second predetermined wireless charging mode.

10. The method of claim 9, wherein the charging the battery according to the first predetermined wireless charging mode comprises:
charging the battery via a first charging channel corresponding to the first predetermined wireless charging mode.

11. The method of claim 9, wherein the charging the battery according to the second predetermined wireless charging mode comprises:
charging the battery via a second charging channel corresponding to the second predetermined wireless charging mode.

12. The method of claim 1, wherein the device to be charged is further configured with the battery, the battery is a one-cell battery or a multi-cell battery, and the multi-cell battery is constituted by a plurality of cells which are connected in series.

13. The method of claim 12, wherein when the multi-cell battery provides power, a voltage reduction operation is performed on an output voltage of the multi-cell battery.

14. The method of claim 1, wherein the method further comprises:
in a wireless charging process, charging the battery via a plurality of charging stages when the charging voltage of the battery is charged to a predetermined cutoff voltage, each of the charging stages corresponding to a charging current, a charging current corresponding to a former one of two adjacent ones of the charging stages being greater than a charging current corresponding to a latter one of the two adjacent ones of the charging stages, each of the charging stages using the corresponding charging current to charge the battery to a limited voltage, and the limited voltage being greater than the predetermined cutoff voltage of the battery; and
stopping charging the battery when the charging stages are completed.

15. The method of claim 13, wherein the method further comprises:
in a wireless charging process, charging the battery via a plurality of charging stages when the charging voltage of the battery is charged to a predetermined cutoff voltage, each of the charging stages corresponding to a charging current, a charging current corresponding to a former one of two adjacent ones of the charging stages being greater than a charging current corresponding to a latter one of the two adjacent ones of the charging stages, each of the charging stages using the corresponding charging current to charge the battery to a limited voltage, and the limited voltage being greater than the predetermined cutoff voltage of the battery; and
charging the battery by the limited voltage in constant voltage charging, and stopping charging the battery until the charging current of the battery reaches a target cutoff current in the constant voltage charging or a charging duration reaches a predetermined duration.

16. A wireless charging method, being applied to a wireless charging apparatus, the wireless charging apparatus being configured with a wireless charging transmitting circuit, the method comprising:
during wireless charging, receiving an adjustment request transmitted by a device to be charged, wherein the adjustment request carries a target charging power and/or a target charging current;
adjusting, according to the target charging power and/or the target charging current, an input voltage of the wireless charging transmitting circuit to obtain adjusted wireless charging signals; and
transmitting, in response to the adjustment request, the adjusted wireless charging signals to the device to be charged, so that an output of the wireless charging apparatus matches the target charging power and/or the target charging current.

17. The method of claim 16, wherein the adjustment request further carries a current charging power and a power difference.

18. The method of claim 17, wherein after the receiving the adjustment request transmitted by the device to be charged, the method further comprises:
adjusting, according to the target charging power and/or the target charging current, the current charging power, and the power difference, the input voltage of the wireless charging transmitting circuit to obtain the adjusted wireless charging signals.

19. The method of claim 16, wherein the wireless charging apparatus is further configured with a voltage conversion circuit, and the adjusting, according to the target charging power and/or the target charging current, the input voltage of the wireless charging transmitting circuit to obtain the adjusted wireless charging signals comprises:
controlling, according to the target charging power and/or the target charging current, the voltage conversion circuit to obtain the adjusted wireless charging signals.

20. The method of claim 16, wherein before the wireless charging, the method further comprises:
determining a charging mode with the device to be charged via wireless communication, wherein the wireless charging mode includes a first predetermined wireless charging mode and a second predetermined wireless charging mode, and a charging speed of the first predetermined wireless charging mode is faster than a charging speed of the second predetermined wireless charging mode.

21. The method of claim 20, wherein the transmitting the adjusted wireless charging signals to the device to be charged comprises:
transmitting the adjusted wireless charging signals to the device to be charged according to the first predetermined wireless charging mode; or
transmitting the adjusted wireless charging signals to the device to be charged according to the second predetermined wireless charging mode.

22. A device to be charged, wherein the device to be charged comprises a first processor, a first memory storing instructions executable by the first processor, a wireless charging receiving circuit, a battery, a detecting module, and a first wireless communication module;
the detecting module is configured to, during wireless charging, detect a charging voltage of the battery and/or a charging current of the battery, and detect a corresponding output current of the wireless charging receiving circuit simultaneously;
the first processor is configured to determine a target charging power according to the charging voltage of the battery and/or the charging current of the battery, and determine a target charging current according to the output current;
the first wireless communication module is configured to transmit an adjustment request to a wireless charging apparatus, wherein the adjustment request carries the target charging power and/or the target charging current; and
the wireless charging receiving circuit is configured to receive adjusted wireless charging signals transmitted by the wireless charging apparatus, and perform wireless charging according to the adjusted wireless charging signals.

23. The device to be charged of claim 22, wherein after determining the target charging power according to the charging voltage of the battery and/or the charging current of the battery, the first processor is further configured to: determine a current charging power according to the charging voltage of the battery and/or the charging current of the battery; and determining a power difference according to the target charging power and the current charging power.

24. The device to be charged of claim 23, wherein the adjustment request further carries the current charging power and the power difference.

25. The device to be charged of claim 22, wherein the detecting module is further configured to detect a charging state.

26. The device to be charged of claim 25, wherein the first processor is specifically configured to: obtain a predetermined current threshold value corresponding to the charging state, when the charging state is constant current charging; and determine the target charging power according to the predetermined current threshold value and the charging voltage of the battery; and
the first processor is specifically configured to: obtain a predetermined voltage threshold value corresponding to the charging state, when the charging state is constant voltage charging; and determine the target charging power according to the predetermined voltage threshold value and the charging current of the battery.

27. The device to be charged of claim 26, wherein the device to be charged further comprises a charging management module;
the wireless charging receiving circuit is specifically configured to output a target output current and a target output voltage according to the wireless charging signals; and
the charging management module is specifically configured to charge the battery after converting the target output current and the target output voltage.

28. The device to be charged of claim 22, wherein the wireless charging receiving circuit is configured to determine a charging mode with the wireless charging apparatus via wireless communication, wherein the wireless charging mode includes a first predetermined wireless charging mode and a second predetermined wireless charging mode, and a charging speed of the first predetermined wireless charging mode is faster than a charging speed of the second predetermined wireless charging mode.

29. The device to be charged of claims 27 and 28, wherein charging the battery according to the first predetermined wireless charging mode; or
charging the battery according to the second predetermined wireless charging mode;
correspondingly,
charging the battery via a first charging channel corresponding to the first predetermined wireless charging mode; or
charging the battery via a second charging channel corresponding to the second predetermined wireless charging mode.

30. The device to be charged of claim 22, wherein the battery is a one-cell battery or a multi-cell battery, and the multi-cell battery is constituted by a plurality of cells which are connected in series;
correspondingly,
when the multi-cell battery provides power, a voltage reduction operation is performed on an output voltage of the multi-cell battery.

31. The device to be charged of claim 22, wherein in a wireless charging process, the battery is charged via a plurality of charging stages when the charging voltage of the battery is charged to a predetermined cutoff voltage, each of the charging stages corresponds to a charging current, a charging current corresponding to a former one of two adjacent ones of the charging stages is greater than a charging current corresponding to a latter one of the two adjacent ones of the charging stages, each of the charging stages uses the corresponding charging current to charge the battery to a limited voltage, and the limited voltage is greater than the predetermined cutoff voltage of the battery; and
stopping charging the battery when the charging stages are completed.

32. The device to be charged of claim 31, in a wireless charging process, charging the battery via a plurality of charging stages when the charging voltage of the battery is charged to a predetermined cutoff voltage, each of the charging stages corresponding to a charging current, a charging current corresponding to a former one of two adjacent ones of the charging stages being greater than a charging current corresponding to a latter one of the two adjacent ones of the charging stages, each of the charging stages using the corresponding charging current to charge the battery to a limited voltage, and the limited voltage being greater than the predetermined cutoff voltage of the battery; and
charging the battery by the limited voltage in a constant voltage method, and stopping charging the battery until the charging current of the battery reaches a target cutoff current in the constant voltage charging or a charging duration reaches a predetermined duration.

33. A wireless charging apparatus, wherein the wireless charging apparatus comprises a second processor, a second memory storing instructions executable by the second processor, a wireless charging transmitting circuit, a second wireless communication module, and a voltage conversion circuit;
the second wireless communication module is configured to, during wireless charging, receive an adjustment request transmitted by a device to be charged, wherein the adjustment request carries a target charging power and/or a target charging current;
the second processor is configured to adjust, according to the target charging power and/or the target charging current, an input voltage of the wireless charging transmitting circuit to obtain adjusted wireless charging signals; and
the wireless charging transmitting circuit is configured to, in response to the adjustment request, transmit the adjusted wireless charging signals to the device to be charged, so that an output of the wireless charging apparatus matches the target charging power and/or the target charging current.

34. The wireless charging apparatus of claim 33, wherein the adjustment request further carries a current charging power and a power difference.

35. The wireless charging apparatus of claim 34, wherein after receiving the adjustment request transmitted by the device to be charged, the second processor is further configured to adjust, according to the target charging power and/or the target charging current, the current charging power, and the power difference, the input voltage of the wireless charging transmitting circuit to obtain the adjusted wireless charging signals.

36. The wireless charging apparatus of claim 33, wherein the wireless charging apparatus further comprises the voltage conversion circuit; and
the second processor is specifically configured to control, according to the target charging power and/or the target charging current, the voltage conversion circuit to obtain the adjusted wireless charging signals.

37. The wireless charging apparatus of claim 33, wherein the wireless charging transmitting circuit is further configured to determine a charging mode with the device to be charged via wireless communication, wherein the wireless charging mode includes a first predetermined wireless charging mode and a second predetermined wireless charging mode, and a charging speed of the first predetermined wireless charging mode is faster than a charging speed of the second predetermined wireless charging mode.

38. The wireless charging apparatus of claim 37, wherein the wireless charging transmitting circuit is specifically configured to:
transmit the adjusted wireless charging signals to the device to be charged according to the first predetermined wireless charging mode; or transmit the adjusted wireless charging signals to the device to be charged according to the second predetermined wireless charging mode.

39. A first computer readable storage medium, storing programs and being applied to a device to be charged, wherein the programs are executed by a processor to implement the method of any one of claims 1-15.

40. A second computer readable storage medium, storing programs and being applied to a wireless charging apparatus, wherein the programs are executed by a processor to implement the method of any one of claims 16-21.
